# EUROPÄISCHE PATENTSCHRIFT

(11) **EP 4 367 995 B1**
(45) Veröffentlichungstag und Bekanntmachung des Hinweises auf die Patenterteilung: **02.09.2026**
(21) Anmeldenummer: 23199284.3
(22) Anmeldetag: 25.09.2023
(51) Int. Cl.: A01B 73/06, A01D 84/00, A01D 89/00

(54) **FELDBEARBEITUNGSMASCHINE MIT EINER AUFNAHMEVORRICHTUNG, DIE EINEN AUFNAHMEROTOR UND EINEN ÜBERGABEROTOR AUFWEIST**
FIELD WORKING MACHINE WITH A PICK-UP DEVICE COMPRISING A PICK-UP ROTOR AND A TRANSFER ROTOR
MACHINE DE TRAITEMENT DE CHAMP AVEC UN DISPOSITIF DE RÉCEPTION AYANT UN ROTOR DE RÉCEPTION ET UN ROTOR DE TRANSFERT

(30) Priorität: 09.11.2022 DE 102022129616
(43) Veröffentlichungstag der Anmeldung: 15.05.2024
(73) Patentinhaber: Maschinenfabrik Bernard Krone GmbH & Co. KG, 48480 Spelle (DE)
(72) Erfinder: Afting, Andreas, 48488 Emsbüren (DE); OSTHUES, CHRISTIAN, 48477 Hörstel (DE); Horstmann, Jan, 48431 Rheine (DE); Horstmann, Dr. Josef, 49479 Ibbenbüren (DE); HASSIG, SEBASTIAN, 49599 Voltlage (DE)

(56) Entgegenhaltungen:
- WO-A1-2013/034480
- DE-A1- 102010 010 862
- DE-A1- 19 501 382
- DE-U1- 202017 000 595
- US-A1- 2012 304 612

## Beschreibung

Die vorliegende Erfindung betrifft eine Feldbearbeitungsmaschine nach dem Oberbegriff von Anspruch 1.

Verschiedene Landmaschinen wie zum Beispiel Schwader, Ballenpressen oder Ladewagen nehmen bei der Feldbearbeitung am Boden liegendes Erntegut, zum Beispiel Gras oder Heu, auf, um dieses zum Beispiel zu bearbeiten, abzutransportieren oder - im Falle eines Schwaders - zu bewegen und an anderer Stelle wieder abzulegen. Zum Aufnehmen des Erntegutes kann eine Aufnahmevorrichtung oder Pickup dienen, die in der Regel vorderseitig der Landmaschine angeordnet ist und in geringem Abstand über den Boden geführt wird. Das Erntegut wird mit einem Aufnahmerotor, der um eine in Querrichtung verlaufende Achse rotiert, vom Boden aufgehoben. Das aufgenommene Erntegut kann direkt an eine nachgeordnete Vorrichtung übergeben werden, zum Teil wird die Übergabe durch einen zweiten Rotor unterstützt. Im Falle eines Bandschwaders wird das Erntegut an eine Querfördervorrichtung übergeben, die das Erntegut mit einem Förderband oder dergleichen quer zur Fahrtrichtung fördert und es seitlich wieder ablegt. Je nach Menge und Beschaffenheit des Erntegutes kann es bei der Aufnahme, Förderung und Übergabe des Erntegutes durch die Aufnahmevorrichtung zu Problemen kommen, die den Erntegutfluss stören und/oder zur Beeinträchtigung der Qualität des Erntegutes führen können. Ein Problem besteht darin, dass sich die Zinken des Aufnahmerotors in Bodennähe entgegen der Fahrtrichtung bewegen und erst im weiteren Verlauf der Rotation aufwärts und dann entgegen der Fahrtrichtung nach hinten. Die unvermeidliche Bewegung entgegen der Fahrtrichtung kann dazu führen, dass Erntegut nach vorne geschoben oder geschleudert wird. Hierdurch kann sich das Erntegut auftürmen und beim Schieben verschmutzt oder gequetscht werden. Außerdem kommt es eventuell mehrmals nacheinander mit den Zinken in Kontakt, wodurch sich die Gefahr einer Beschädigung vervielfacht. Sofern ein weiterer Rotor zur Übergabe an die nachgeordnete Vorrichtung genutzt wird, kann es auch bei der Übergabe von einem Rotor zum anderen Rotor zu Problemen kommen, wodurch sich Erntegut anstauen kann. Schließlich kann es vorkommen, dass das Erntegut nicht an die nachgeordnete Vorrichtung abgegeben wird, sondern am Rotor haftet und weiter mitgeführt wird. Auch diese Unregelmäßigkeiten erhöhen die Gefahr einer Beschädigung des Ernteguts und beeinträchtigen die Effizienz der Landmaschine.

Die DE 20 2017 000 595 U1 offenbart eine landwirtschaftliche Erntemaschine, insbesondere Merger, Ladewagen oder Ballenpresse, mit einem Erntegutförderer zum Aufnehmen und Fördern von halm- und/oder blattförmigem Erntegut, umfassend einen Stachelrotor, der umlaufend antreibbare Förderzinken aufweist, die zwischen Abstreifern angeordnet sind und sich entlang eines Abschnitts ihrer Umlaufbahn zumindest teilweise zwischen die Abstreifer zurückziehen, sowie einem Zusatzförderrotor im Ablagebereich des Stachelrotors zum Weiterfördern des von den Förderzinken abgestreiften Ernteguts. Dabei weist der Zusatzförderrotor zwischen die Förderzinken des Stachelrotors greifende Mitnehmerabschnitte auf.

Die Druckschrift US 2012/0304612 A1 offenbart eine Ballenpresse umfassend eine Bodenwalze mit Umfangsnuten, wobei die Bodenwalze eine Ballenformungswalze der Ballenkammer ist. Die Ballenpresse umfasst weiterhin einen Drehförderer mit Zuführungsfingern. Die Zuführungsfinger greifen dabei in die Umfangsnuten ein.

Aufgabe der Erfindung ist es, eine effiziente und schonende Aufnahme sowie Weitergabe von am Boden liegendem Erntegut zu ermöglichen.

Die Aufgabe wird gelöst mit einer Feldbearbeitungsmaschine mit den Merkmalen des unabhängigen Patentanspruchs 1. Vorteilhafte Ausführungsformen sind den abhängigen Ansprüchen entnehmbar.

Dafür wird eine Feldbearbeitungsmaschine geschaffen, mit wenigstens einer Aufnahmevorrichtung, die einen Aufnahmerotor und einen Übergaberotor aufweist, welche um Drehachsen, die sich wenigstens überwiegend entlang einer Querachse erstrecken, gleichsinnig antreibbar sind, wobei der Aufnahmerotor dazu eingerichtet ist, landwirtschaftliches Erntegut mittels Aufnahmezinken vom Boden aufzunehmen, bezüglich einer Hochachse anzuheben und an den Übergaberotor zu übergeben, der dazu eingerichtet ist, das Erntegut mittels Übergabezinken zu übernehmen und an eine nachgeordnete Vorrichtung zu übergeben, welche bezüglich einer Längsachse wenigstens teilweise hinter der Aufnahmevorrichtung angeordnet ist, wobei die Übergabezinken derart zwischen die Aufnahmezinken eingreifen, dass sich Bewegungsbereiche von Übergabezinken und von Aufnahmezinken, entlang der Querachse gesehen, überlappen, wobei die Aufnahmevorrichtung eine Abstreifvorrichtung aufweist mit Aufnahmezinken-Abstreiferabschnitten sowie bezüglich der Querachse dazwischen ausgebildeten Aufnahmezinken-Zwischenräumen, durch welche die Aufnahmezinken wenigstens teilweise hindurchragen.

Die Feldbearbeitungsmaschine dient im weitesten Sinne zur Feldbearbeitung. Genauer dient sie zum einen dazu, landwirtschaftliches Erntegut, zum Beispiel Gras oder Heu, vom Boden aufzunehmen. Je nach Ausgestaltung kann das Erntegut weiterverarbeitet (zum Beispiel geschnitten), in der Feldbearbeitungsmaschine aufgenommen, und/oder wieder auf dem Boden abgelegt werden. Die Feldbearbeitungsmaschine kann beispielsweise als Landmaschine mit eigenem Fahrwerk ausgebildet sein, zum Beispiel als Ballenpresse, Feldhäcksler oder Ladewagen. Sie kann einen eigenen Fahrantrieb aufweisen oder dazu vorgesehen sein, von einem Schlepper gezogen zu werden. Sie kann aber auch zum Beispiel als Anbaugerät ausgebildet sein, welches von einem Schlepper oder dergleichen front- oder heckseitig getragen wird und kein Fahrwerk aufweist, welches dazu eingerichtet wäre, ihr Gewicht dauerhaft abzustützen. Die Feldbearbeitungsmaschine weist eine Aufnahmevorrichtung auf, welche auch als Pickup bezeichnet werden kann. Diese kann dauerhaft mit einem Fahrzeugkörper oder Hauptrahmen der Feldbearbeitungsmaschine verbunden sein oder aber zu einem Modul gehören, welches bedarfsweise mit dem Fahrzeugkörper oder Hauptrahmen verbunden wird.

Die Aufnahmevorrichtung weist einen Aufnahmerotor und einen Übergaberotor auf, welche um Drehachsen, die sich wenigstens überwiegend entlang einer Querachse erstrecken, gleichsinnig antreibbar sind. Die Querachse sowie die nachfolgend genannte Hoch- und Längsachse können als Achsen der Aufnahmevorrichtung und/oder als Achsen der Feldbearbeitungsmaschine angesehen werden. Zumindest im Betriebszustand verläuft die Längsachse normalerweise parallel oder antiparallel zur Fahrtrichtung, während die Querachse horizontal und senkrecht zur Längsachse verläuft und die Hochachse vertikal verläuft. Die Drehachsen der beiden Rotoren können insbesondere parallel zueinander verlaufen. Sie erstrecken sich wenigstens überwiegend entlang der Querachse, das heißt sie verlaufen entweder parallel zur Querachse oder nicht-parallel zu dieser, wobei allerdings die Hauptkomponente ihrer Verlaufsrichtung parallel zur Querachse verläuft. In der Regel beträgt der Winkel zwischen einer Drehachse und der Querachse höchstens 30° oder höchstens 20°. Es sind Ausführungsformen denkbar, bei denen jeder Rotor bezüglich der Querachse zweigeteilt ist, wobei die Rotorhälften gegeneinander verkippbar sind. In diesem Fall verläuft die Drehachse in beiden Rotorhälften unterschiedlich, insgesamt erstreckt sie sich aber überwiegend entlang der Querachse. Die Rotoren sind gleichsinnig antreibbar. Man kann auch sagen, die Feldbearbeitungsmaschine und/oder die Aufnahmevorrichtung sind dazu eingerichtet, die Rotoren gleichsinnig anzutreiben, also im gleichen Drehsinn.

Der Aufnahmerotor ist dazu eingerichtet, landwirtschaftliches Erntegut mittels Aufnahmezinken vom Boden aufzunehmen, bezüglich der Hochachse anzuheben und an den Übergaberotor zu übergeben. Die Übergabezinken erstrecken sich bezüglich der Drehachse des Aufnahmerotors in radialer Richtung nach außen. Sie können an einem gemeinsamen Rotorkern angeordnet sein, der um die Drehachse drehbar ist.

Die Aufnahmezinken sind ungesteuert, das heißt sie sind - zum Beispiel über den Rotorkern - relativ zueinander drehfest verbunden, können aber ggf. elastisch auslenkbar sein. Die Aufnahmezinken können aus Metall bestehen, gegebenenfalls aber auch aus anderen Materialien wie Kunststoff oder Verbundstoffen. Sie können insbesondere aus Draht oder Stangen ausgebildet sein. Alternativ wäre auch eine Ausbildung aus Blech oder vergleichbarem flächigem Material möglich. Der Aufnahmerotor kann in geringem Abstand am Boden entlang geführt werden, wobei die Aufnahmezinken das Erntegut erfassen und dieses mitführen. Entsprechend der Drehbewegung des Aufnahmerotors wird das Erntegut bezüglich der Hochachse angehoben, wobei selbstverständlich keine reine vertikale Bewegung erfolgt, sondern die Hubbewegung von einer horizontalen Bewegung überlagert wird. Insgesamt ist das Erntegut allerdings deutlich oberhalb des Bodens angeordnet, wenn es an den Übergaberotor übergeben wird.

Der Übergaberotor ist dazu eingerichtet, das Erntegut mittels Übergabezinken zu übernehmen und an eine nachgeordnete Vorrichtung zu übergeben, welche bezüglich der Längsachse wenigstens teilweise hinter der Aufnahmevorrichtung angeordnet ist. Die oben hinsichtlich der Aufnahmezinken gemachten Ausführungen lassen sich weitgehend auf die Übergabezinken übertragen. Insbesondere sind auch sie ungesteuert, also relativ zueinander drehfest verbunden. Allerdings ist für die Übergabezinken eine Ausbildung aus Blech oder anderem flächigem Material bevorzugt. Sowohl die Aufnahmezinken also auch die Übergabezinken können in Zinkenkränzen gruppiert sein, die mehrere Zinken aufweisen, deren axiale Position bezüglich der Drehachse übereinstimmt. Der Übergaberotor übernimmt das Erntegut und übergibt es an die nachgeordnete Vorrichtung. Zwischen der Übernahme und der Übergabe fördert der Übergaberotor das Erntegut normalerweise bezüglich der Längsachse nach hinten, also entgegen der Fahrtrichtung. Diese horizontale Bewegung kann wiederum von einer vertikalen Bewegung überlagert sein. Der Begriff "nachgeordnete Vorrichtung" ist in diesem Zusammenhang breit auszulegen. So kann die nachgeordnete Vorrichtung gegebenenfalls rein passiv ausgebildet sein, in der Regel weist sie allerdings wenigstens ein aktives Element zum Fördern und/oder Verarbeiten des Ernteguts auf. In diesem Zusammenhang schließt der Begriff "übergeben" auch ein Werfen beziehungsweise Fallenlassen ein, wobei das Erntegut zwischenzeitig weder Kontakt mit dem Übergaberotor noch mit der nachgeordneten Vorrichtung hat. Da die gesamte Förderbewegung auf zwei Rotoren verteilt wird, können beide vergleichsweise klein ausgestaltet sein. So kann ein Durchmesser des Aufnahmerotors, genauer gesagt der Durchmesser des Bewegungsbereichs eines seiner Aufnahmezinken, insbesondere zwischen 40 cm und 70 cm betragen. Der Durchmesser des Übergaberotors kann ähnlich gewählt werden.

Die Übergabezinken greifen derart zwischen die Aufnahmezinken ein, dass sich Bewegungsbereiche von Übergabezinken und von Aufnahmezinken, entlang der Querachse gesehen, überlappen. Der Bewegungsbereich eines Zinkens ist derjenige Bereich, den der Zinken aufgrund der Drehbewegung des Rotors durchläuft. Dieser Bewegungsbereich ist rotationssymmetrisch zur Drehachse des Rotors. In Richtung der Drehachse betrachtet ist er kreisförmig oder kreisringförmig. Entlang der Querachse gesehen, überlappen die Bewegungsbereiche von Übergabezinken und Aufnahmezinken miteinander. Wie oben dargelegt, unterscheidet sich die Verlaufsrichtung der Querachse nicht oder nur geringfügig von denjenigen der Drehachsen. Im Allgemeinen lassen sich zylindrische Hüllflächen für die Aufnahmezinken einerseits sowie für die Übergabezinken andererseits definieren. Diese Hüllflächen schneiden einander. Außerdem kann man sagen, dass die Summe der Radien der Bewegungsbereiche eines Aufnahmezinkens und eines Übergabezinkens größer ist als der Abstand der Drehachsen der beiden Rotoren. Somit greifen die Übergabezinken in Zwischenräume ein, die entlang der Querachse zwischen den Aufnahmezinken ausgebildet sind. Entsprechend greifen die Aufnahmezinken in Zwischenräume ein, die entlang der Querachse zwischen den Übergabezinken ausgebildet sind. Durch das Eingreifen in die Zwischenräume wird die Übergabe des Ernteguts wesentlich verbessert. Die Übergabezinken sind in der Lage, Erntegut direkt zu erfassen, das sich noch zwischen den Aufnahmezinken befindet.

Die Aufnahmevorrichtung weist eine Abstreifvorrichtung auf mit Aufnahmezinken-Abstreiferabschnitten sowie bezüglich der Querachse dazwischen ausgebildeten Aufnahmezinken-Zwischenräumen, durch welche die Aufnahmezinken wenigstens teilweise hindurchragen. Die Aufnahmezinken-Abstreiferabschnitte können durch einzelne Elemente gebildet sein oder sie können Teilabschnitte eines einzigen Bauteils sein. In der Regel sind sie aus Stahl gefertigt und können zum Beispiel streifenförmig ausgebildet sein. Ihre Funktion besteht darin, Erntegut wenigstens teilweise von den Aufnahmezinken abzustreifen, wenn sich diese im Zuge der Drehbewegung an den Aufnahmezinken-Abstreiferabschnitten entlang bewegen. Dabei bewegen sich die Aufnahmezinken durch Aufnahmezinken-Zwischenräume, die zwischen den Aufnahmezinken-Abstreiferabschnitten ausgebildet sind. Sie ragen wenigstens teilweise durch die genannten Zwischenräume hindurch. Normalerweise ist vorgesehen, dass sie sich auf Ihrer Bewegungsbahn in einem bestimmten Bereich vollständig zwischen den Aufnahmezinken-Abstreiferabschnitte eintauchen oder abtauchen, sich also zwischen diese zurückziehen. Sie entfernen sich von einer Außenseite der Abstreifvorrichtung, auf welcher das Erntegut zurückgehalten werden kann, zu einer Innenseite. Es wären u.U. auch Ausgestaltungen denkbar, bei denen die Aufnahmezinken nicht vollständig abtauchen. Dabei könnte im Bereich der Spitzen der Aufnahmezinken verbleibendes Erntegut durch die Übergabezinken abgenommen werden.

Die Abstreifvorrichtung weist Übergabezinken-Abstreiferabschnitte auf sowie dazwischen ausgebildete Übergabezinken-Zwischenräume, durch welche die Übergabezinken wenigstens teilweise hindurchragen, wobei die Übergabezinken-Abstreiferabschnitte derart ausgebildet sind, dass die Übergabezinken entsprechend einer Rotation des Übergaberotors zwischen ihnen eintauchen. Die Funktion der Übergabezinken-Abstreiferabschnitte bezüglich der Übergabezinken entspricht derjenigen der Aufnahmezinken-Abstreiferabschnitte bezüglich der Aufnahmezinken, das heißt sie streifen Erntegut von den Übergabezinken ab, wenn sich diese an ihnen entlang bewegen. Insbesondere ziehen sich die Übergabezinken vollständig zwischen die Übergabezinken-Abstreifer zurück, das heißt sie tauchen vollständig in die Übergabezinken-Zwischenräume ein. Somit wird ein vollständiges Abstreifen des Erntegutes ermöglicht oder sogar erzwungen. Wenngleich zwischen Aufnahmezinken-Abstreiferabschnitten und Übergabezinken-Abstreiferabschnitten unterschieden wird, kann ein Aufnahmezinken-Abstreiferabschnitt unmittelbar an einen Übergabezinken-Abstreiferabschnitt angrenzen oder sogar einstückig mit diesem ausgebildet sein. Die Aufnahmezinken-Zwischenräume sind bezüglich der Querachse zu den Übergabezinken-Zwischenräumen versetzt. Dies entspricht der Anordnung der Aufnahmezinken, die ebenfalls bezüglich der Querachse zu den Übergabezinken versetzt angeordnet sind.

Erfindungsgemäß ist, dass wenigstens ein Aufnahmezinken-Zwischenraum in einem Übergangsbereich in einen Übergabezinken-Zwischenraum übergeht. Somit bilden die beiden Zwischenräume Teilbereiche eines durchgehenden Zwischenraums. Der Übergangsbereich kann dem Aufnahmezinken-Zwischenraum und/oder dem Übergabezinken-Zwischenraum zugeordnet werden, wobei die Zuordnung oftmals nicht eindeutig ist. Regelmäßig zieht sich ein Aufnahmezinken im Übergangsbereich auf die Innenseite der Abstreifvorrichtung zurück, während ein Übergabezinken dort zur Außenseite hin auftaucht. Im Übergangsbereich oder zumindest nahe demselben kommt es also zu einer Übergabe von Erntegut zwischen den Rotoren. Diese Übergabe wird dadurch begünstigt, dass die Zwischenräume ineinander übergehen, statt voneinander getrennt zu sein.

Die erfindungsgemäße Feldbearbeitungsmaschine ermöglicht eine hocheffiziente, erntegutschonende Aufnahme und Weitergabe des Erntegutes. Zunächst kann der Aufnahmerotor vergleichsweise klein ausgeführt sein, da er das Erntegut nicht die gesamte Strecke in Richtung der nachgeordneten Vorrichtung fördern muss, sondern der Übergaberotor ihn diesbezüglich ergänzt. Ein kleinerer Aufnahmerotor bedeutet wiederum, dass am Boden liegendes Erntegut, welches vor dem Aufnahmerotor als Matte oder Haufen einer bestimmten Höhe liegt, eher aufwärts und entlang der Längsachse nach hinten gefördert werden kann, statt nach vorne geschleudert oder geschoben zu werden. Letzteres bedeutet, dass das Erntegut weniger effektiv aufgenommen wird, und oftmals mehrmals vom Aufnahmerotor erfasst werden muss. Außerdem kann dies dazu führen, dass ein vergleichsweise großer Haufen von Erntegut vor dem Aufnahmerotor her über den Boden geschoben wird, was ebenfalls das Erntegut verschmutzen und/oder beschädigen kann. Des Weiteren unterstützt das Eingreifen der Übergabezinken zwischen die Aufnahmezinken die effiziente Weitergabe des Erntegutes an den Übergaberotor. Es kann Erntegut zumindest teilweise direkt vom Übergaberotor übernommen werden, ohne dass es durch die Aufnahmezinken-Abstreiferabschnitte abgestreift werden muss. Auch dies kann dazu beitragen, das Erntegut zu schonen. Schließlich verhindern die Übergabezinken-Abstreiferabschnitte, dass Erntegut durch den Übergaberotor eventuell wieder zurück in Richtung des Aufnahmerotors gefördert wird, statt an die nachgeordnete Vorrichtung übergeben zu werden. Ein solches Rückfördern wäre nachteilig und könnte zur Beschädigung des Erntegutes sowie zur Verstopfung von Teilen der Aufnahmevorrichtung führen.

Neben den hier genannten Elementen kann die Aufnahmevorrichtung noch weitere Elemente aufweisen, insbesondere Bodenführungselemente, über welche sie wenigstens anteilig bodenseitig abstützbar ist. Die Bodenführungselemente dienen einerseits dazu, wenigstens einen Teil der Gewichtskraft der Aufnahmevorrichtung an den Boden weiterzugeben, so dass dieser nicht anderweitig aufgenommen wird, zum Beispiel durch andere Teile der Feldbearbeitungsmaschine. Insbesondere dienen die Bodenführungselemente allerdings dazu, gewissermaßen das Bodenprofil zu ertasten und somit einen optimalen Abstand der Aufnahmevorrichtung zum Boden einzuhalten. Das heißt, die Aufnahmevorrichtung wird mittels der Bodenführungselemente am Bodenprofil entlang geführt. Bei den Bodenführungselementen könnte es sich insbesondere um Räder, Rollen, Walzen oder auch Kufen handeln.

In aller Regel ist der Übergaberotor wenigstens teilweise höher angeordnet als der Aufnahmerotor und ist dazu eingerichtet, das vom Aufnahmerotor übernommene Erntegut wenigstens anfänglich bezüglich der Hochachse anzuheben. Das heißt, das Erntegut wird nicht nur durch den Aufnahmerotor, sondern auch durch den Übergaberotor aufwärts gefördert und somit angehoben. "Wenigstens anfänglich" bezieht sich in diesem Zusammenhang auf die Bewegungsphase des Erntegutes, die auf die Übernahme durch den Übergaberotor folgt. Die oben geschilderten Vorteile einer Aufteilung der Förderstrecke auf zwei Rotoren gelten selbstverständlich auch für das Aufwärtsfördern des Erntegutes. Es kann in erntegutschonender und effizienter Weise eine Förderhöhe erreicht werden, die vorteilhafte Möglichkeiten hinsichtlich der Übergabe an die nachgeordnete Vorrichtung ermöglicht.

Bevorzugt weisen die Übergabezinken ein in Drehrichtung vorne angeordnetes Übergabe-Förderprofil auf, welches rückwärts geneigt ist, so dass es radial nach außen hin tangential zurückweicht, und die Aufnahmezinken ein in Drehrichtung vorne angeordnetes Aufnahme-Förderprofil aufweisen, welches wenigstens bereichsweise stärker vorwärts geneigt ist als das Übergabe-Förderprofil. Die Drehrichtung ist hierbei diejenige Richtung, in die der Rotor im Normalbetrieb gedreht wird. Das Übergabe-Förderprofil sowie das Aufnahme-Förderprofil entsprechen jeweils der Berandung des jeweiligen Rotors in seiner Rotationsebene, und zwar auf der Seite, die in seiner Drehrichtung nach vorne weist. Dies ist somit das Profil, welches vornehmlich auf das Erntegut einwirkt. Das Aufnahme-Förderprofil ist stärker vorwärts geneigt als das - stets rückwärts geneigte - Übergabe-Förderprofil. Dies bedeutet, dass das Aufnahme-Förderprofil entweder eine geringere Rückwärtsneigung aufweist als das Übergabe-Förderprofil, eine Vorwärtsneigung, oder keine Neigung, das heißt das Aufnahme-Förderprofil kann auch radial verlaufen. Diese Ausführungsform nutzt die Tatsache, dass das Förderprofil der beiden Rotoren unabhängig im Hinblick auf ihre jeweilige Aufgabe angepasst werden kann. Für das Aufnehmen des Erntegutes vom Boden ist eine geringe Rückwärtsneigung oder sogar eine Vorwärtsneigung optimal. Andererseits ist für das Abstreifen des Erntegutes eine eher starke Rückwärtsneigung vorteilhaft, die das Zusammenwirken mit der Abstreifvorrichtung erleichtert. Die Begriffe "Vorwärtsneigung" beziehungsweise "Rückwärtsneigung" bezeichnen hierbei jeweils eine Neigung gegenüber der radialen Richtung oder (dreidimensional betrachtet) der axial-radialen Ebene.

Vorteilhaft sind die Übergabezinken derart ausgebildet sind, dass im Verlauf der Bewegung des Übergaberotors entlang der Abstreifvorrichtung ein Abstreifwinkel zwischen einem jeweils zur Abstreifvorrichtung benachbarten Teil des Übergabe-Förderprofils und dem benachbarten Übergabezinken-Abstreiferabschnitt durchgehend wenigstens 80° beträgt. Der Abstreifwinkel kann jeweils ermittelt werden, indem man in der Rotationsebene des Übergaberotors die Tangenten an das Übergabe-Förderprofil und die Oberfläche des Abstreifers bildet, und zwar dort, wo sich das Übergabe-Förderprofil und die Oberfläche bezogen auf die genannte Rotationsebene schneiden. Dies entspricht dem radial innersten Bereich, in dem Erntegut zwischen Übergabezinken und Abstreifer gefördert und/oder abgestreift wird. Idealerweise sollte das Erntegut immer eine radial nach außen gerichtete Kraftkomponente erfahren, so dass der Abstreifwinkel über 90° betragen sollte. In Abhängigkeit von verschiedenen Parametern, insbesondere der Beschaffenheit und Menge des Ernteguts, kann aber auch ein wenigstens bereichsweise geringerer Abstreifwinkel ausreichend sein. Liegt dieser unter 80°, führt dies allerdings in der Regel dazu, dass Erntegut nicht optimal abgestreift, sondern zwischen Übergabezinken und Abstreifer eingeklemmt und gequetscht wird. Besonders bevorzugt kann vorgesehen sein, dass der Abstreifwinkel im Verlauf der Bewegung des Übergaberotors zunimmt, wobei er in einem Eintauchbereich, in welchem die Übergabezinken vollständig zwischen die Übergabezinken-Abstreiferabschnitte eintauchen, oder zumindest in der Nähe des Eintauchbereichs seinen Maximalwert erreicht.

Ebenfalls ist es bevorzugt, dass die Übergabezinken ein Übergabe-Förderprofil aufweisen, welche rückwärts geneigt ist, wobei ein Neigungswinkel gegenüber einer radialen Richtung radial nach außen hin zunimmt. Das heißt, das Übergabe-Förderprofil ist nach außen hin zunehmend rückwärts geneigt. Die entsprechende Zunahme ist wenigstens bereichsweise gegeben, normalerweise durchgehend. Es wäre aber auch denkbar, dass die Rückwärtsneigung bereichsweise konstant ist oder abnimmt. Durch die von innen nach außen zunehmende Rückwärtsneigung kann das Abstreifverhalten positiv beeinflusst werden. Hierdurch kann insbesondere auch erreicht werden, dass der Abstreifwinkel ausreichend groß bleibt, wenn die Übergabezinken nach und nach zwischen den Übergabezinken-Abstreiferabschnitte eintauchen. Normalerweise nimmt der Winkel zwischen der radialen Richtung des Übergaberotors und der Oberfläche des Abstreifer zum Eintauchbereich hin ab. Dies kann durch eine Zunahme der Rückwärtsneigung nach außen hin kompensiert werden.

Auch ist es möglich, dass die Aufnahmezinken ein Aufnahme-Förderprofil aufweisen, das radial nach außen hin zunehmend vorwärts geneigt ist. Das heißt, das Aufnahme-Förderprofil kann zum Beispiel radial innen eine Rückwärtsneigung aufweisen, die nach außen hin abnimmt und/oder in einen radialen Verlauf oder eine Vorwärtsneigung übergeht. Es könnte auch durchgehend eine Vorwärtsneigung aufweisen, die radial nach außen hin zunimmt.

Die Abstreifvorrichtung weist vorteilhaft an einem Übergangsbereich eine einen Aufnahmezinken-Zwischenraum begrenzende Leitkante auf, die gegenüber einer zur Drehachse des Aufnahmerotors senkrechten Rotationsebene in Richtung auf den Übergabezinken-Zwischenraum zur Drehachse hin geneigt ist. Entsprechend der Rotationsbewegung der Rotoren verlaufen die Kanten der Zwischenräume normalerweise überwiegend parallel zu der Rotationsebene des jeweiligen Rotors. Hierdurch ist überall ein gleichbleibender, vorteilhaft geringer Abstand zwischen Abstreifvorrichtung und Zinken gewährleistet. Dort, wo ein Zwischenraum endet oder beginnt, ist zum einen ein Kantenverlauf parallel zur Rotationsachse möglich. Im Übergangsbereich erleichtert es allerdings die Übergabe vom Aufnahmerotor zum Übergaberotor, wenn die Leitkante weder parallel zur Rotationsachse noch senkrecht zu dieser verläuft, sondern in Richtung auf den benachbarten Übergabezinken-Zwischenraum geneigt ist. Somit wird Erntegut, das sich zwischen dem abtauchenden Aufnahmezinken und der Leitkante befindet, seitlich in Richtung des Übergabezinken-Zwischenraums und somit in Richtung des Übergaberotors gelenkt. Vorteilhaft beträgt die Neigung gegenüber der Rotationsebene zwischen 20° und 70°, weiter bevorzugt zwischen 30° und 60°. Eine stärkere Neigung als 70° beeinträchtigt im Allgemeinen die seitlich ablenkende Wirkung, so dass sich Erntegut an der Kante aufstauen kann. Eine schwächere Neigung als 20° führt allgemein dazu, dass die Leitkante relativ lang sein muss, wodurch sich ein großer Teilbereich des Aufnahmezinken-Zwischenraums ergibt, der vom Aufnahmezinken nicht erfasst wird. Dies wäre gewissermaßen ein unerwünschter "Totbereich", durch den Erntegut entweder unkontrolliert hindurchfallen würde oder der nach und nach durch Erntegut verstopf würde.

Insbesondere kann die Feldbearbeitungsmaschine als Schwader ausgebildet sein, mit wenigstens einer Schwadereinheit, die eine Aufnahmevorrichtung aufweist sowie als nachgeordnete Vorrichtung eine Querfördervorrichtung, die dazu eingerichtet ist, das vom Übergaberotor übergebene Erntegut auf einer Förderfläche aufzunehmen, entlang der Querachse zu fördern und schwadweise auf dem Boden abzulegen. Schwader sind dazu vorgesehen, Erntegut, welches flächig und/oder zufällig verteilt auf dem Boden liegt, in Schwaden abzulegen. Derartige Maschinen werden auch als Merger oder als Heuwerbungsmaschinen bezeichnet, wobei die Anwendbarkeit ausdrücklich nicht auf Heu beschränkt ist. Normalerweise verfügt der Schwader über keinen eigenen Fahrantrieb und ist dazu vorgesehen, von einem Schlepper gezogen oder als Anbaugerät von einem Schlepper getragen zu werden. Eine Ausgestaltung mit eigenen Fahrantrieb ist allerdings denkbar.

Der Schwader kann einen Hauptrahmen aufweisen, der im Betriebszustand über ein Fahrwerk abstützbar ist. Dieser Hauptrahmen kann gewissermaßen das zentrale Element des Schwaders bilden und wesentlich für dessen strukturelle Stabilität verantwortlich sein. Er ist in sich normalerweise starr ausgebildet, kann allerdings aus einer Mehrzahl miteinander verbundener Bauteile bestehen. Im Betriebszustand ist der Hauptrahmen über ein Fahrwerk abstützbar. Der Hauptrahmen kann das Fahrwerk aufweisen, das somit Teil des Schwaders ist. Wenn der Schwader als Anbaugerät ausgelegt ist, ist er im Betriebszustand an eine Landmaschine angekoppelt, die das Fahrwerk aufweist. In jedem Fall kann über den Hauptrahmen und das Fahrwerk wenigstens ein Teil der Gewichtskraft des Schwaders aufgenommen und bodenseitig abgestützt werden. Der Hauptrahmen kann außerdem zur wenigstens indirekten Verbindung mit einem Schlepper ausgebildet sein, wobei eine hierfür genutzte Deichsel als Teil des Hauptrahmens angesehen werden kann. Alternativ kann der Hauptrahmen Strukturen zur Verbindung mit einer Landmaschine aufweisen, die einen Einsatz als Anbaugerät ermöglichen.

Der Schwader weist wenigstens eine Schwadereinheit auf. Diese kann wenigstens indirekt mit dem Hauptrahmen verbunden sein. Typischerweise ist entweder genau eine Schwadereinheit vorgesehen oder zwei Schwadereinheiten. Die jeweilige Schwadereinheit kann mit einem Seitenausleger verbunden sein, der seinerseits mit dem Hauptrahmen verbunden ist oder einen Teil desselben bildet. Die Schwadereinheit weist diejenigen Elemente des Schwaders auf, die bestimmungsgemäß direkt mit dem Erntegut in Kontakt kommen und dieses transportieren.

Die jeweilige Schwadereinheit weist eine oben beschriebene Aufnahmevorrichtung auf sowie als nachgeordnete Vorrichtung eine Querfördervorrichtung mit einem Querförderrahmen. Bezüglich der Längsachse ist die Querfördervorrichtung, wie oben erläutert, wenigstens teilweise hinter der Aufnahmevorrichtung angeordnet. Der Übergaberotor übergibt das Erntegut an die Querfördervorrichtung. Dies kann, wie bereits erwähnt, auch ein Werfen oder Fallenlassen einschließen. Die Querfördervorrichtung ist dazu eingerichtet, das übergebene Erntegut auf einer Förderfläche aufzunehmen, entlang der Querachse zu fördern und schwadweise auf dem Boden abzulegen. Die Querfördervorrichtung weist hierzu ein Förderelement auf, in aller Regel ein endlos umlaufendes Förderelement, beispielsweise ein Förderband oder Gliederband, wobei man auch von einem Bandschwader sprechen kann. Dieses Förderelement kann die Förderfläche bilden oder aufweisen, auf der das Erntegut aufgenommen wird. Im Fall eines umlaufenden Förderelements bewegt sich die Förderfläche bezüglich der Querachse seitwärts und nimmt das Erntegut dabei mit. Normalerweise fördert die Querfördervorrichtung das Erntegut parallel zur Querachse, sie könnte es allerdings auch in einem gewissen Winkel zur Querachse fördern. Die Querfördervorrichtung kann einen Querförderrahmen aufweisen, an welchem das Förderelement beweglich gelagert ist. Der Querförderrahmen verleiht der Querfördervorrichtung insgesamt mechanische Stabilität und ist normalerweise in sich starr ausgebildet. Die Aufnahmevorrichtung kann mit der Querfördervorrichtung verbunden sein. Insbesondere kann sie über den Querförderrahmen mit dem Hauptrahmen verbunden sein. Normalerweise sind die Querfördervorrichtung und/oder die Aufnahmevorrichtung gegenüber dem Hauptrahmen beweglich, insbesondere wenigstens bezüglich der Hochachse höhenbeweglich. Zusätzlich zu der Höhenbeweglichkeit kann auch eine Beweglichkeit entlang der Längsachse und/oder der Querachse gegeben sein. Abgesehen von translatorischen Bewegungen des Querförderrahmen sind auch rotatorische Bewegung denkbar, beispielsweise ein Querpendeln (entsprechend einer Rotation um die Längsachse).

Im Stand der Technik sind Aufnahmevorrichtungen bekannt, die das Erntegut gewissermaßen auf eine Querfördervorrichtung aufschieben. Eine derartige Konfiguration, bei der die Übergabe des Erntegutes gewissermaßen in einer Ebene erfolgt, ist im Rahmen der vorliegenden Erfindung nicht ausgeschlossen, kann allerdings zu Problemen führen. So kann das Erntegut je nach Beschaffenheit beim Schieben verklumpen und lässt sich nur noch schwer zur Seite fördern. Auch kann das Erntegut hierdurch beschädigt werden. Es ist daher bevorzugt, dass der Übergaberotor dazu eingerichtet ist, das Erntegut bezüglich der Hochachse wenigstens teilweise oberhalb der Förderfläche abzugeben und auf diese abzuwerfen. Eine derartige Ausführungsform lässt sich insbesondere mit einem Aufnahmerotor realisieren, der das Erntegut an einen höher angeordneten Übergaberotor übergibt. In jedem Fall erstreckt sich bei dieser Ausführungsform der Übergaberotor höher als die Förderfläche, oder zumindest als ein Teil derselben. Je nach Ausführungsform lässt sich nicht exakt bestimmen, an welchem Punkt und somit in welcher Höhe das Erntegut vom Übergaberotor abgegeben wird. Normalerweise lässt sich allerdings ein typischer Abgabebereich identifizieren. Insbesondere bei einer ausreichend hohen Drehzahl kann das Erntegut in etwa tangential von den Übergabezinken abgeworfen werden. Es fällt dann in einer normalerweise bogenförmigen Flugbahn auf die Förderfläche. Sofern das Erntegut nicht abgeschleudert oder abgeworfen werden kann, kann es auch durch die Übergabezinken-Abstreiferabschnitte von den Übergabezinken entfernt werden, wonach es ungefähr senkrecht auf die Förderfläche fallen kann. Betrachtet man einen niedrigsten Bereich der Förderfläche, so kann ein bezüglich der Hochachse oberster Punkt des Bewegungsbereichs der Übergabezinken entlang der Hochachse um beispielsweise wenigstens 70 % oder wenigstens 50 % eines Durchmessers des Bewegungsbereichs höher angeordnet sein als der genannte niedrigste Bereich.

Vorteilhaft ist ein Eintauchbereich, in welchem die Übergabezinken vollständig zwischen den Übergabezinken-Abstreiferabschnitte eintauchen, oberhalb eines zur Aufnahmevorrichtung benachbarten Bereichs der Förderfläche angeordnet. Der Eintauchbereich ist also der Bereich, in dem das Eintauchen der Übergabezinken abgeschlossen ist. Eventuell noch an den Übergabezinken anhaftendes Erntegut wird spätestens in dem Eintauchbereich, welcher auch als Rückzugsbereich bezeichnet werden kann, von den Übergabezinken abgestreift. Dieser entspricht normalerweise dem niedrigsten Punkt, von welchem aus Erntegut herabfallen kann. Dieser Bereich ist noch oberhalb desjenigen Bereichs der Förderfläche angeordnet, der zur Aufnahmevorrichtung benachbart ist. Der genannte Bereich kann in etwa senkrecht unterhalb des Eintauchbereichs angeordnet sein. Für das Erntegut ergibt sich somit eine Fallstufe von dem Eintauchbereich zur Förderfläche. Deren Höhe kann beispielsweise wenigstens 10 % oder wenigstens 15 % des Durchmessers des Bewegungsbereichs eines Übergabezinkens betragen. In absoluten Zahlen beträgt sie bevorzugt wenigstens 5 cm, wenigstens 7 cm oder wenigstens 10 cm.

Eine Ausgestaltung sieht vor, dass die Querfördervorrichtung zumindest derart anordenbar ist, dass die Förderfläche gegenüber der horizontalen Ebene zur Aufnahmevorrichtung hin geneigt ist. Das heißt, die Förderfläche ist entweder dauerhaft entsprechend geneigt oder es sind verschiedene Anordnung der Querfördervorrichtung möglich, wobei die Förderfläche in wenigstens einer der genannten Anordnungen zur Aufnahmevorrichtung hin geneigt ist. Die Förderfläche verläuft also nicht horizontal, sondern ist zur Aufnahmevorrichtung hin geneigt, also in der Regel in Fahrtrichtung nach vorne. Der Neigungswinkel gegenüber der horizontalen Ebene kann insbesondere zwischen 5° und 35°, bevorzugt zwischen 10° und 30°, weiter bevorzugt zwischen 15° und 25° betragen. Durch die Schrägstellung der Förderfläche wird verhindert, dass Erntegut, welches mit erheblicher Geschwindigkeit vom Übergaberotor abgeschleudert wird, sich zu weit nach hinten bewegt. Das kann somit eine bessere und gleichmäßigere Verteilung des Erntegutes auf der Förderfläche erreicht werden. Bei einer Neigung, die deutlich über 35° liegt, besteht die Gefahr, dass das Erntegut auf der Förderfläche abwärtsrutscht oder -rollt und sich in einem vorderen Bereich der Förderfläche sammelt. Unabhängig davon, ob die Förderfläche wie hier beschrieben geneigt ist, kann auf einer der Aufnahmevorrichtung gegenüberliegenden Seite der Förderfläche eine Rückhaltevorrichtung, insbesondere ein Prallblech, angeordnet sein. Dieses kann gegenüber der horizontalen Ebene eine deutlich stärkere Neigung in Fahrtrichtung nach vorne aufweisen (zum Beispiel über 70°) und kann sogar überhängende Bereiche aufweisen, die nach oben hin in Fahrtrichtung vorspringen.

Wie bereits oben erläutert wurde, trägt die erfindungsgemäße Ausgestaltung mit zwei Rotoren dazu bei, zu verhindern, dass sich vor dem Aufnahmerotor ein übermäßig hoher Haufen von Erntegut sammelt. Dieser Effekt kann noch weiter unterstützt werden. Gemäß einer entsprechenden Ausgestaltung weist die Feldbearbeitungsmaschine einen Niederhalter auf, mit einer bezüglich der Längsachse wenigstens teilweise vor dem Aufnahmerotor angeordneten drehbaren Niederhalterwalze sowie einer bezüglich der Längsachse wenigstens teilweise dahinter angeordneten Leitabdeckung, die zwischen sich und wenigstens einem der Rotoren einen Förderkanal für Erntegut definiert. Die Niederhalterwalze, welche eine glatte oder profilierte Oberfläche aufweisen kann, ist um eine normalerweise parallel zur Querachse verlaufende Drehachse drehbar. Sie übt insbesondere einen vertikalen Druck auf das Erntegut vor dem Aufnahmerotor aus und beschränkt somit ein Auftürmen des Ernteguts. Gleichzeitig kann sie je nach Ausgestaltung auch als Gegenhalter für Erntegut wirken, welches bereits vom Aufnahmerotor aufgenommen wurde. Der Niederhalter weist außerdem eine Leitabdeckung auf, die bezüglich der Längsachse wenigstens teilweise hinter der Niederhalterwalze angeordnet ist. Sie kann sich in gewissem Abstand an die Niederhalterwalze anschließen. Die Leitabdeckung kann insbesondere wenigstens ein Leitblech aufweisen oder als ein solches ausgebildet sein. Bevorzugt ist sie für Erntegut undurchlässig und weist eine geschlossene Fläche auf. Es wären allerdings auch Ausgestaltungen denkbar, in denen sie beispielsweise eine Mehrzahl beabstandeter Führungselemente aufweist, die insbesondere bogenförmig ausgebildet sein können. Die Leitabdeckung könnte auch als Leithaube bezeichnet werden. Sie bildet, gegebenenfalls ergänzend zur Niederhalterwalze, einen Gegenhalter für das Erntegut und begrenzt dessen Bewegungsspielraum. Somit wird zwischen der Leitabdeckung und wenigstens einem der Rotoren ein Förderkanal für das Erntegut definiert. Durch diesen kann im Wesentlichen ein Verlust von Erntegut verhindert werden und/oder das Erntegut kann von dem entsprechenden Rotor effektiver gefördert werden.

Bevorzugt ist der Niederhalter über wenigstens einen Niederhalterträger derart aufgehängt, dass er gegenüber den Rotoren wenigstens höhenbeweglich ist. Der Niederhalterträger kann seinerseits direkt oder indirekt mit dem Fahrzeugkörper oder einem Hauptrahmen der Feldbearbeitungsmaschine verbunden sein. Gemäß einer Ausgestaltung ist der Niederhalterträger beweglich mit einem Querförderrahmen der Querfördervorrichtung verbunden. Insbesondere kann er schwenkbar mit diesem verbunden sein. In jedem Fall sorgt der Niederhalterträger für eine Aufhängung des Niederhalters, die wenigstens eine Höhenbewegung relativ zu den Rotoren ermöglicht.

Die Höhenbewegung kann von einer Bewegung in horizontaler Richtung überlagert sein. Über ein Federelement, beispielsweise einen Hydraulikzylinder, kann dabei eine Ruhelage des Niederhalterträgers definiert sein, aus der er ausgelenkt werden kann, beispielsweise wenn aufgrund einer größeren Erntegutmenge vor dem Aufnahmerotor die Niederhalterwalze nach oben ausweichen muss. Gleiches gilt für ein möglicherweise notwendiges Ausweichen der Leitabdeckung.

Wenngleich eine entsprechende Höhenbeweglichkeit des Niederhalters in seiner Gesamtheit vorteilhaft ist, kann ergänzend hierzu oder gegebenenfalls als Alternative vorgesehen sein, dass die Niederhalterwalze und/oder die Leitabdeckung einzeln gegenüber dem Niederhalterträger verstellbar sind. Sowohl bezogen auf die Niederhalterwalze als auch auf die Leitabdeckung kann eine vertikale Verstellung und/oder eine horizontale Verstellung möglich sein. In Bezug auf die Niederhalterwalze kann diese an einem Walzenträger angeordnet sein, der gegenüber dem Niederhalterträger translatorisch verstellbar und/oder schwenkbar sein kann. Eine manuelle Verstellbarkeit ist möglich, wobei die jeweils gewählte Position durch Festziehen einer Arretierungsschraube gesichert werden kann. Allerdings wäre auch eine aktorische Verstellbarkeit denkbar.

Gemäß einer Ausführungsform weist die Feldbearbeitungsmaschine eine Mehrzahl von Leitzinken auf, die sich entlang der Längsachse erstrecken und dazu eingerichtet sind, das vom Übergaberotor abgegebene Erntegut in Richtung auf die nachgeordnete Vorrichtung zu lenken, wobei eine Neigung der Leitzinken gegenüber der Längsachse in Richtung auf die Querachse einstellbar ist. Die Leitzinken sind in aller Regel bezüglich der Querachse voneinander beabstandet, das heißt es sind Zwischenräume zwischen ihnen ausgebildet. Die Leitzinken können aus Metall, gegebenenfalls aber auch aus anderen Materialien wie Kunststoff oder Verbundstoffen bestehen. Sie können aus Draht oder Stangen ausgebildet sein. Alternativ wäre auch eine Ausbildung aus Blech oder vergleichbarem flächigem Material möglich. Die Leitzinken erstrecken sich entlang der Längsachse, verlaufen allerdings im Allgemeinen nicht parallel zu dieser. Allerdings ist bevorzugt wenigstens eine Stellung vorgesehen, in der die Leitzinken parallel zur Längsebene verlaufen, also zu der Ebene, die durch Längsachse und Hochachse aufgespannt wird. Bevorzugt sind die Leitzinken wenigstens teilweise oberhalb des Übergaberotors angeordnet. Durch die Leitzinken kann das Erntegut, welches vom Übergaberotor abgegeben wird, in Richtung auf die nachgeordnete Vorrichtung gelenkt werden. Dies ist insbesondere bei einer Querfördervorrichtung vorteilhaft. Die Leitzinken geben durch ihren Verlauf eine Bewegungsrichtung vor, der das Erntegut mit minimalem Widerstand folgen kann. Im Allgemeinen bewegt sich das Erntegut nicht exakt parallel zur Verlaufsrichtung der Leitzinken, dennoch üben sie eine leitende oder lenkende Wirkung auf das Erntegut aus. Dies wird bei der vorliegenden Ausgestaltung dahingehend genutzt, dass die Neigung der Leitzinken zur Querachse hin einstellbar ist. Das heißt, die Leitzinken können unterschiedlich stark (oder auch gar nicht) zur Seite geneigt werden. Hierdurch erfährt das Erntegut, welches durch den Übergaberotor im Wesentlichen in Richtung der Längsachse sowie in Richtung der Hochachse angetrieben wird, eine seitliche Ablenkung. Man kann auch sagen, dass dem Erntegut eine Geschwindigkeitskomponente in Richtung der Querachse eingeprägt wird.

Es wird in diesem Zusammenhang als eigenständige Erfindung angesehen, eine Feldbearbeitungsmaschine nach dem Oberbegriff von Anspruch 1 zur Verfügung zu stellen, die eine Mehrzahl von Leitzinken aufweist, die sich entlang der Längsachse erstrecken und dazu eingerichtet sind, das vom Übergaberotor abgegebene Erntegut in Richtung auf die nachgeordnete Vorrichtung zu lenken, wobei eine Neigung der Leitzinken gegenüber der Längsachse in Richtung auf die Querachse einstellbar ist.

Eine Ausgestaltung sieht vor, dass der Niederhalter eine Mehrzahl von Leitzinken aufweist, die die sich entlang der Längsachse erstrecken und dazu eingerichtet sind, das vom Übergaberotor abgegebene Erntegut in Richtung auf die nachgeordnete Vorrichtung zu lenken. Diese Ausgestaltung kann optional mit der o.g. Ausgestaltung kombiniert werden, bei der die Neigung zu Querachse einstellbar ist. Die Leitzinken können sich an die Leitabdeckung anschließen. Beispielsweise können sie beweglich, insbesondere schwenkbar, mit der Leitabdeckung verbunden sein. Dabei erstrecken sich die Leitzinken bezüglich der Längsachse nach hinten, also entgegen der Fahrtrichtung. Die Leitzinken können teilweise zwischen sich und einem der Rotoren, insbesondere dem Übergaberotor, einen Zwischenraum definieren. Dieser kann sich an den o.g. Förderkanal anschließen oder kann auch als Teil desselben angesehen werden. Im Unterschied zu der Leitabdeckung sind die Leitzinken in der Regel derart beabstandet, dass Erntegut zwischen ihnen hindurchgelangen könnte. Dies ist allerdings in dem Bereich, in dem die Leitzinken angeordnet sind, normalerweise weniger problematisch. Insbesondere besteht in diesem Bereich in der Regel nur noch eine geringe Gefahr, dass Erntegut gänzlich verloren geht, also wieder zu Boden fällt. Normalerweise gelangt selbst das Erntegut, das zwischen den Leitzinken hindurchtritt, noch zur nachgeordneten Vorrichtung, insbesondere zu Querfördervorrichtung. Es wäre allerdings auch denkbar, oberhalb der Leitzinken noch eine Abdeckung vorzusehen, die auch als Teil der Leitabdeckung ausgebildet sein kann. Auf diese Weise könnte der Verlust von Erntegut praktisch völlig verhindert werden.

Es sind auch noch weitere Verstellmöglichkeiten der Leitzinken denkbar. Eine Ausgestaltung sieht vor, dass eine Neigung der Leitzinken gegenüber der Längsachse in Richtung auf die Hochachse einstellbar ist. Man kann auch sagen, dass hier eine Neigung gegenüber der horizontalen Ebene einstellbar ist. Hierdurch kann insbesondere eine Wurfweite des Übergaberotors verändert werden. Werden die Leitzinken - von vorne nach hinten gesehen - stärker abwärts geneigt, wird das Erntegut schneller und/oder stärker abwärts gelenkt, was gleichbedeutend mit einer geringeren Wurfweite ist. Werden die Leitzinken stärker aufwärts geneigt, resultiert eine größere Wurfweite. Es versteht sich, dass die Wurfweite von weiteren Parametern abhängt, insbesondere der Rotationsgeschwindigkeit des Übergaberotors sowie der Beschaffenheit des Ernteguts. Eine individuelle Einstellbarkeit einzelner Leitzinken ist möglich. Vorteilhaft können allerdings auch alle Leitzinken an einem Zinkenträger angeordnet sein, der mitsamt den Leitzinken schwenkbar ist. Die Neigung kann manuell einstellbar sein, da sie normalerweise für die Bearbeitung eines Feldes konstant gehalten werden kann. Optional könnte sie allerdings auch aktorisch einstellbar sein.

Beispielhaft und nicht als Teil der Erfindung wird außerdem eine Aufnahmevorrichtung für eine Feldbearbeitungsmaschine zur Verfügung gestellt, aufweisend einen Aufnahmerotor und einen Übergaberotor, welche um Drehachsen, die sich wenigstens überwiegend entlang einer Querachse erstrecken, gleichsinnig antreibbar sind, wobei der Aufnahmerotor dazu eingerichtet ist, landwirtschaftliches Erntegut mittels Aufnahmezinken vom Boden aufzunehmen, bezüglich einer Hochachse anzuheben und an den Übergaberotor zu übergeben, der dazu eingerichtet ist, das Erntegut mittels Übergabezinken zu übernehmen und an eine nachgeordnete Vorrichtung zu übergeben, welche bezüglich einer Längsachse wenigstens teilweise hinter der Aufnahmevorrichtung angeordnet ist, wobei die Übergabezinken derart zwischen die Aufnahmezinken eingreifen, dass sich Bewegungsbereiche von Übergabezinken und von Aufnahmezinken, entlang der Querachse gesehen, überlappen, wobei die Aufnahmevorrichtung eine Abstreifvorrichtung aufweist mit Aufnahmezinken-Abstreiferabschnitten sowie bezüglich der Querachse dazwischen ausgebildeten Aufnahmezinken-Zwischenräumen, durch welche die Aufnahmezinken wenigstens teilweise hindurchragen.

Die Abstreifvorrichtung der beispielhaften Aufnahmevorrichtung Übergabezinken-Abstreiferabschnitte auf sowie dazwischen ausgebildete Übergabezinken-Zwischenräume, durch welche die Übergabezinken wenigstens teilweise hindurchragen, wobei die Übergabezinken-Abstreiferabschnitte derart ausgebildet sind, dass die Übergabezinken entsprechend einer Rotation des Übergaberotors zwischen ihnen eintauchen.

Die genannten Begriffe wurden bereits oben mit Bezug auf die erfindungsgemäße Feldbearbeitungsmaschine erläutert. Vorteilhafte Ausführungsformen der beispielhaften Aufnahmevorrichtung entsprechen denen der erfindungsgemäßen Feldbearbeitungsmaschine.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Ansicht einer als Schwader ausgebildeten erfindungsgemäßen Feldbearbeitungsmaschine;
- Fig. 2: eine Seitenansicht einer Schwadereinheit des Schwaders aus Fig. 1;
- Fig. 3: eine seitliche Schnittdarstellung eines Teils der Schwadereinheit aus Fig. 2;
- Fig. 4: eine perspektivische Ansicht einer Aufnahmevorrichtung der Schwadereinheit aus Fig.2;
- Fig. 5: eine weitere Ansicht der Aufnahmevorrichtung aus Fig. 4;
- Fig. 6: eine Schnittdarstellung eines Teils der Aufnahmevorrichtung aus Fig.4; sowie

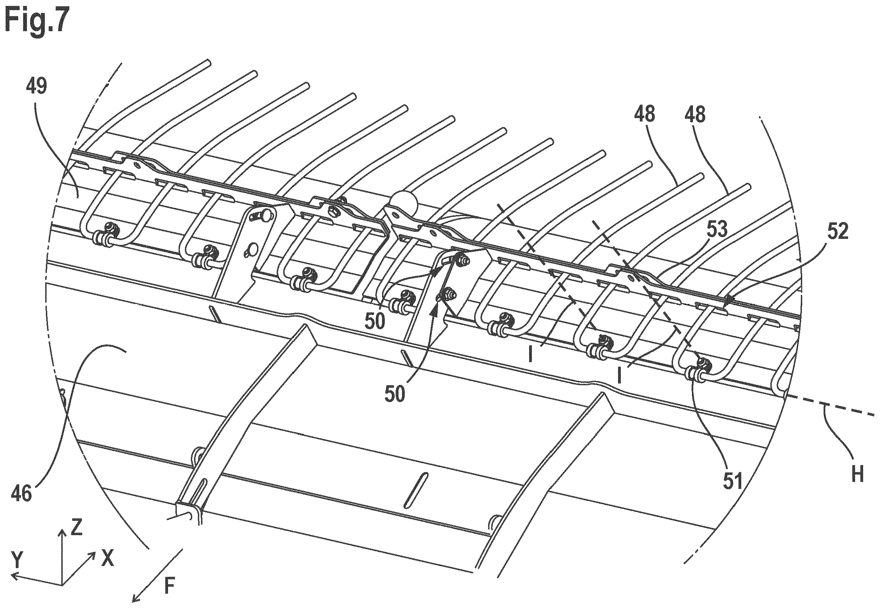

- Fig. 7: eine perspektivische Darstellung eines Teils eines Niederhalters der Schwadereinheit aus Fig. 2.

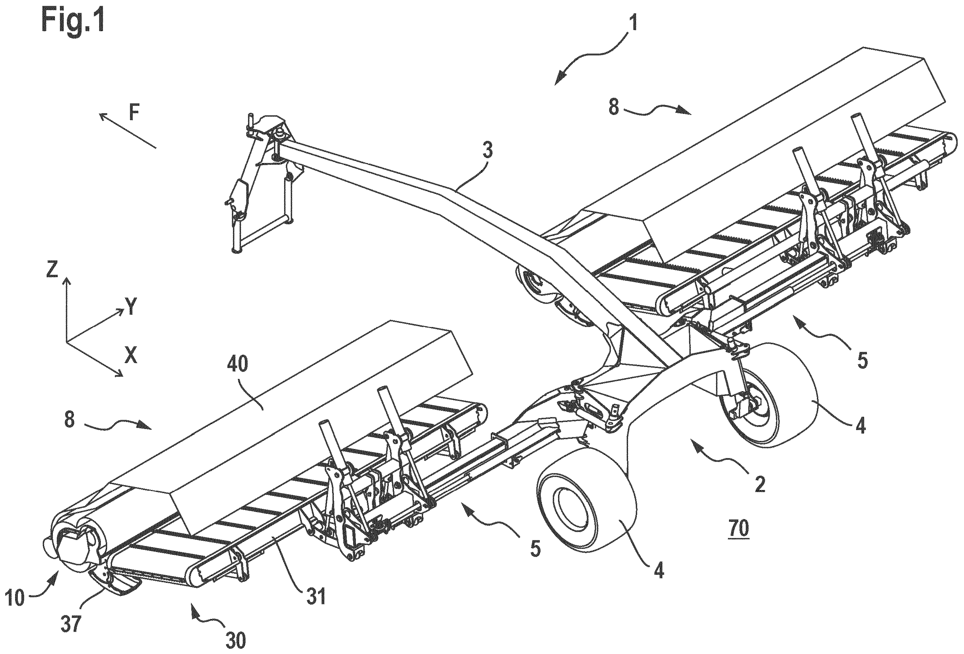

Fig. 1 zeigt eine erfindungsgemäße Feldbearbeitungsmaschine, in diesem Fall einen Schwader 1, der dazu vorgesehen ist, von einem hier nicht dargestellten Schlepper gezogen zu werden. Der Schwader 1 weist einen Hauptrahmen 2 auf, der über zwei Räder eines Fahrwerks 4 an einem Boden 70 abstützbar ist. Außerdem weist der Hauptrahmen 2 eine in einer Fahrtrichtung F nach vorne weisende, sich entlang einer Längsachse X erstreckende Deichsel 3 auf, über welche er an den Schlepper angekoppelt wird. Parallel zu einer Querachse Y erstrecken sich beiderseits des Hauptrahmens 2 zwei Seitenausleger 5, an denen jeweils eine Schwadereinheit 8 angeordnet ist. Die beiden Schwadereinheiten 8 sowie ihre Verbindung mit dem Hauptrahmen 2 sind identisch beziehungsweise spiegelsymmetrisch, weshalb nachfolgend nur jeweils eine Schwadereinheit 8 betrachtet wird.

Die Schwadereinheit 8 weist eine Aufnahmevorrichtung 10 auf sowie eine bezüglich der Längsachse X dahinter angeordnete Querfördervorrichtung 30. Wenn der Schwader 1 in Fahrtrichtung F gezogen wird, nimmt die Aufnahmevorrichtung 10 Erntegut vom Boden 70 auf und übergibt es an die Querfördervorrichtung 30. Die Querfördervorrichtung 30 weist einen Querförderrahmen 31 sowie ein daran umlaufend antreibbares Förderband 32 auf. Durch dieses Förderband 32 wird das Erntegut auf einer Förderfläche 33 aufgenommen, bezüglich der Querachse Y seitwärts gefördert und schwadweise auf dem Boden 70 abgelegt. Fig. 1 zeigt eine Konfiguration des Schwaders 1, die für eine Ablage des Erntegutes nach innen, also zur Mittelebene des Schwaders 1, vorgesehen ist. Dabei sind die beiden Schwadereinheiten 8 entlang der Querachse Y deutlich beabstandet und die Förderbänder 32 werden so betrieben, dass sie das Erntegut jeweils zur Mitte hin fördern. In einer alternativen, hier nicht dargestellten Arbeitskonfiguration können die Schwadereinheit 20 an den Seitenauslegern 5 zur Mitte hin verstellt werden, so dass sie unmittelbar benachbart zueinander angeordnet sind. Die Schwadereinheit 8 ist in hier nicht näher erläuterter Weise gegenüber dem Hauptrahmen 2 beweglich aufgehängt. Insbesondere ist sie höhenbeweglich und kann über Bodenführungselemente 37 das Profil des Bodens 70 abtasten und diesem folgen.

Die Aufnahmevorrichtung 10 weist einen um eine erste Drehachse A drehend antreibbaren Aufnahmerotor 11 auf, der dicht über dem Boden 70 entlang geführt wird, sowie einen gleichsinnig hierzu um eine zweite Drehachse B drehend antreibbaren Übergaberotor 14, der bezüglich der Längsachse X nach hinten sowie bezüglich einer Hochachse Z nach oben gegenüber dem Aufnahmerotor 11 versetzt ist. In den Figuren verlaufen die Drehachsen A, B parallel zur Querachse Y, was der Ausrichtung auf einem ebenen, horizontal ausgerichteten Boden 70 entspricht. Aufgrund der erwähnten Beweglichkeit der Schwadereinheit kann sich die Ausrichtung der Drehachsen A, B zeitweise von der Querachse Y unterscheiden, normalerweise aber um höchstens 20°. Es ist auch möglich, dass nicht nur die Schwadereinheit insgesamt beweglich ist, sondern auch, dass die Aufnahmevorrichtung 10 entlang der Querachse Y in zwei Teileinheiten aufgeteilt ist, die gegeneinander verkippen können, um sich an Bodenunebenheiten anzupassen. In diesem Fall kann jede der Drehachsen in den beiden Teileinheiten unterschiedlich verlaufen, wobei sich allerdings typischerweise ebenfalls Abweichungen von weniger als 20° ergeben.

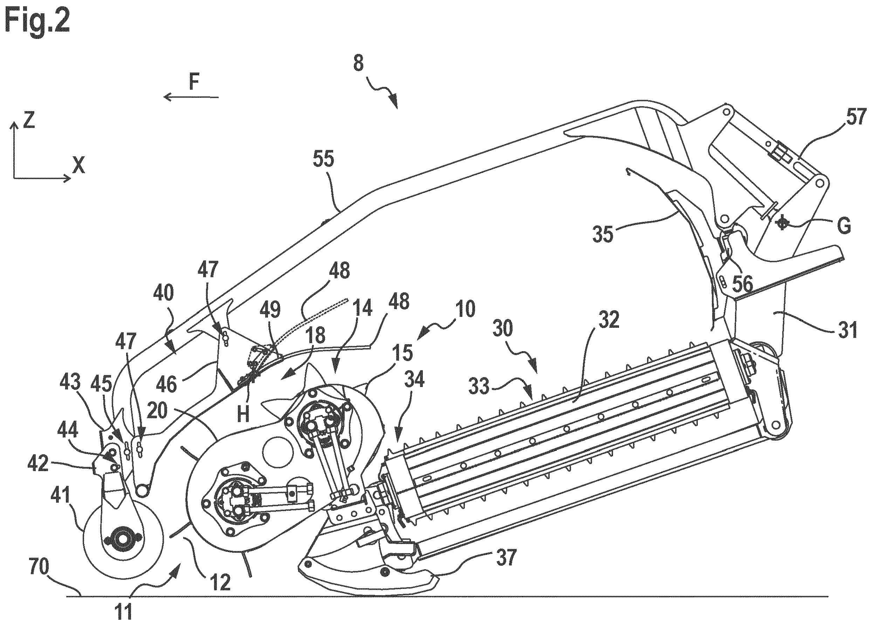

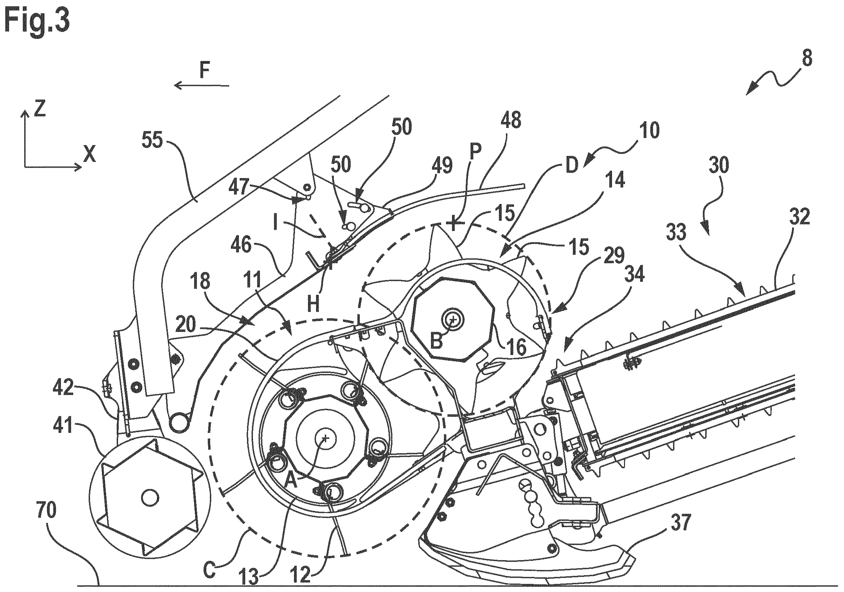

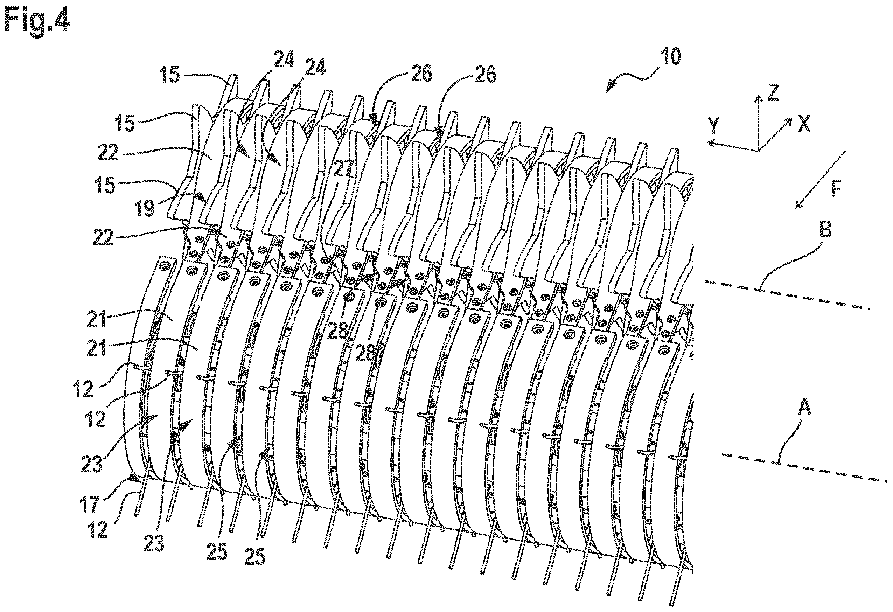

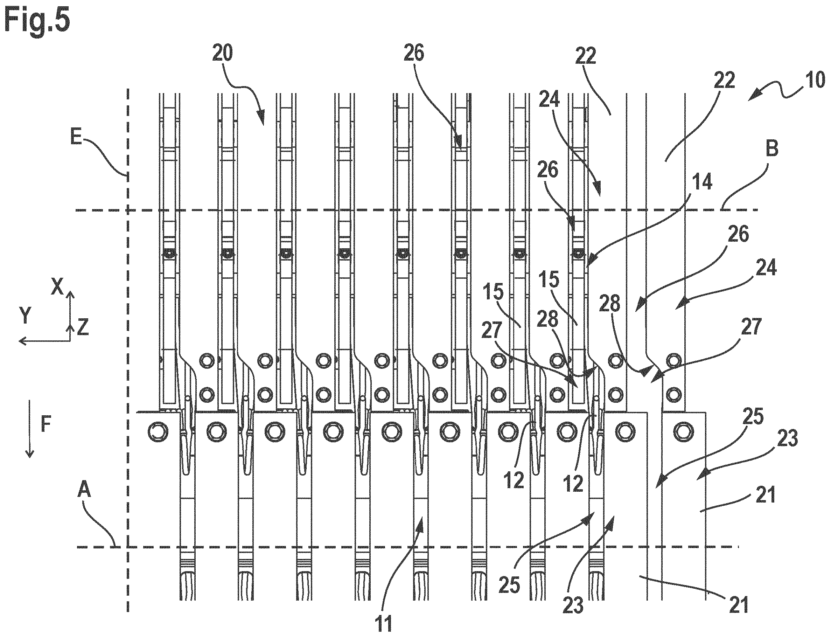

Die Funktion der Aufnahmevorrichtung 10 besteht darin, Erntegut vom Boden 70 aufzunehmen und an die Querfördervorrichtung 30 zu übergeben. Genauer gesagt nimmt der Aufnahmerotor 11 das Erntegut auf und übergibt es an den Übergaberotor 14, der es seinerseits an die Querfördervorrichtung 30 übergibt. Der Aufnahmerotor 11 weist eine Mehrzahl von Aufnahmezinken 12 auf, die vorliegend aus Federdraht gebildet sind. Sie sind auf einem in Fig. 2 sichtbaren Rotorkern 13 angeordnet. Wie beispielsweise in Fig. 4 und 5 erkennbar ist, sind die Aufnahmezinken 12 in einer Mehrzahl von Zinkenkränzen gruppiert, die entlang der Querachse Y beabstandet sind. Der Übergaberotor 14 weist eine Mehrzahl von Übergabezinken 15 auf, die durch Segmente aus Metallblech oder aber Kunststoff gebildet sein können. Auch diese sind in Zinkenkränzen gruppiert und auf einem Rotorkern 16 angeordnet. In Fig. 1 sind aus Gründen der Übersichtlichkeit statt der jeweiligen Zinken 12, 15 jeweils nur die zylindrischen Hüllflächen ihrer Bewegungsbereiche C, D dargestellt. Wie aus Fig. 3 hervorgeht, überlappt ein erster Bewegungsbereich C jedes Aufnahmezinkens 12 in Richtung der Querachse Y (welche senkrecht zur Zeichenebene in Fig. 3 verläuft) mit einem zweiten Bewegungsbereich D eines Übergabezinkens 15. Dies wird dadurch ermöglicht, dass die Übergabezinken 15 in Richtung der Querachse Y zu den Aufnahmezinken 12 versetzt angeordnet sind und somit in Zwischenräume zwischen den jeweiligen Aufnahmezinken 12 eingreifen können. Dieser Sachverhalt geht insbesondere aus Fig. 4 und 5 hervor.

Die Aufnahmevorrichtung 10 weist des Weiteren eine Abstreifvorrichtung 20 auf, die aus metallischen Abstreiferelementen 21, 22 gebildet ist. Die Abstreifvorrichtung 20 definiert entlang der Querachse Y zwischen den Aufnahmezinken 12 angeordnete Aufnahmezinken-Abstreiferabschnitte 23 sowie entlang der Querachse Y zwischen den Übergabezinken 15 angeordnete Übergabezinken-Abstreiferabschnitte 24. Bei dieser Ausführungsform wird der jeweilige Aufnahmezinken-Abstreiferabschnitt 23 im Wesentlichen durch ein erstes Abstreiferelement 21 gebildet, während der jeweilige Übergabezinken-Abstreiferabschnitt 24 im Wesentlichen durch ein zweites Abstreiferelement 22 gebildet wird, das sich jeweils nahezu lückenlos an ein erstes Abstreiferelement 21 anschließt. Es wären allerdings auch andere Ausgestaltungen möglich. Die Aufnahmezinken 12 bewegen sich jeweils durch Aufnahmezinken-Zwischenräume 25, die zwischen zwei Aufnahmezinken-Abstreiferabschnitten 23 ausgebildet sind. Die Übergabezinken 15 bewegen sich durch Übergabezinken-Zwischenräume 26, die zwischen jeweils zwei Übergabezinken-Abstreiferabschnitten 24 ausgebildet sind. Die Aufnahmezinken-Zwischenräume 23 sind bezüglich der Querachse Y zu den Übergabezinken-Zwischenräumen 26 versetzt. Dies entspricht der Anordnung der Aufnahmezinken 12, die ebenfalls bezüglich der Querachse Y zu den Übergabezinken 15 versetzt angeordnet sind. Jeweils ein Aufnahmezinken-Zwischenraum 25 geht in einem Übergangsbereich 27 in einen Übergabezinken-Zwischenraum 26 über. Im Zuge ihrer Rotationsbewegung ziehen sich die Aufnahmezinken 12 im Übergangsbereich 27 auf eine Innenseite der Abstreifvorrichtung 20 zurück, während sich die Übergabezinken 15 im Übergangsbereich 27 von der Innenseite der Abstreifvorrichtung 20 zur Außenseite hin bewegen. Am Übergangsbereich 27 weist die Abstreifvorrichtung 20 eine Leitkante 28 auf, die den Aufnahmezinken-Zwischenraum 25 begrenzt. Diese Leitkante 28 ist gegenüber einer zur ersten Drehachse A des Aufnahmerotors 11 senkrechten Rotationsebene E in Richtung auf den benachbarten Übergabezinken-Zwischenraum 26 zur Drehachse A hin geneigt ist. Somit wird Erntegut, dass sich zwischen dem zur Innenseite abtauchenden Aufnahmezinken 12 und der Leitkante 28 befindet, seitlich in Richtung des Übergabezinken-Zwischenraums 26 und somit in Richtung des Übergaberotors 14 gelenkt. In diesem Beispiel beträgt die Neigung gegenüber der Rotationsebene E ca. 45°, es wären aber auch andere Neigungswinkel möglich, zum Beispiel zwischen 30° und 60°. Das Erntegut wird von den Übergabezinken 15 erfasst und weitergefördert. In einem Eintauchbereich 29, welcher bezüglich der Längsachse X rückwärtig der Abstreifvorrichtung 20 angeordnet ist, ziehen sich die Übergabezinken 15 wieder vollständig zwischen die Übergabezinken-Abstreiferabschnitte 24 zurück.

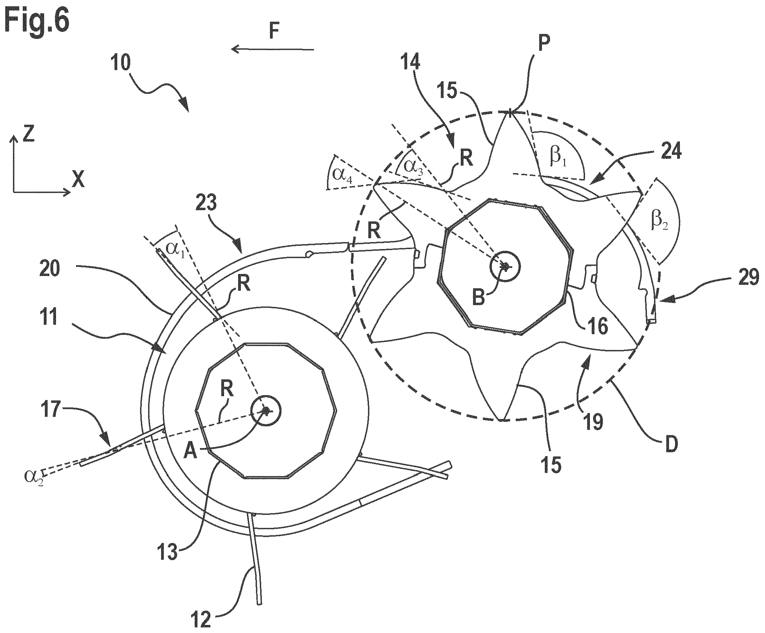

Wie insbesondere in Fig. 6 erkennbar ist, weisen die Übergabezinken 15 ein in Drehrichtung vorne angeordnetes Übergabe-Förderprofil 19 auf, das rückwärts geneigt ist, so dass es radial nach außen hin tangential zurückweicht. Der entsprechende Neigungswinkel α₃, α₄ gegenüber einer radialen Richtung R beträgt hier zwischen 33° und 40°. Die Aufnahmezinken 12 weisen ein in Drehrichtung vorne angeordnetes Aufnahme-Förderprofil 17 auf, das ebenfalls rückwärts geneigt ist, allerdings durchgehend schwächer als das Übergabe-Förderprofil 19. Der Neigungswinkel α₁, α₂ gegenüber der radialen Richtung R beträgt in diesem Beispiel zwischen 6° und 16°. Das verhältnismäßig schwach rückwärts geneigte Aufnahme-Förderprofil 17 ist für das Aufnehmen des Erntegutes vom Boden 70 optimiert. Um dies weiter zu unterstützen, nimmt der Neigungswinkel α₁, α₂ von innen nach außen noch ab, so dass er innen einem ersten Neigungswinkel α₁ von 16° entspricht und außen einem zweiten Neigungswinkel α₂ von 6°. Für das Abstreifen des Erntegutes ist hingegen die vergleichsweise starke Rückwärtsneigung des Übergabe-Förderprofils 19 vorteilhaft, da sie das Zusammenwirken mit der Abstreifvorrichtung 20 erleichtert. Der Neigungswinkel α₃, α₄ nimmt radial von innen nach außen sogar von einem dritten Neigungswinkel α₃ von 33° auf einen vierten Neigungswinkel α₄ von 40° zu. Durch diese Rückwärtsneigung beträgt ein Abstreifwinkel β₁, β₂ zwischen dem Übergabe-Förderprofil und der Abstreifvorrichtung 20 in diesem Beispiel stets über 100°. Der Abstreifwinkel β₁, β₂ verändert sich im Verlauf der Rotation des Übergaberotors 14 und wird jeweils zwischen einem zur Abstreifvorrichtung 20 benachbarten Teil des Übergabe-Förderprofils 19 und dem benachbarten Übergabezinken-Abstreiferabschnitt 24 gemessen. Bei dem in Fig. 6 obersten Übergabezinken 15 ist ein erster Abstreifwinkel β₁ von 106° gegeben. Bei dem in Drehrichtung nächsten Übergabezinken 15 ist ein Abstreifwinkel β₂ von 108° gegeben, das heißt der Abstreifwinkel nimmt zu, bis er schließlich im Eintauchbereich 29 seinen maximalen Wert erreicht (in diesem Beispiel 118°). Diese Zunahme des Abstreifwinkels β₁, β₂ wird wesentlich durch die oben beschriebene Zunahme des Neigungswinkels α₃, α₄ begünstigt. Durch den stets deutlich über 90° liegenden Abstreifwinkel erfährt das Erntegut immer eine radial nach außen gerichtete Kraftkomponente, so dass es nicht zwischen Übergabezinken 15 und Abstreifvorrichtung 20 eingeklemmt und gequetscht werden kann. Durch die Zunahme des Abstreifwinkels β₁, β₂ wird der Abstreifeffekt zum Eintauchbereich 29 hin zunehmend intensiviert.

Da der Übergaberotor 14 wenigstens teilweise höher angeordnet ist als der Aufnahmerotor 11, erfolgt insgesamt ein zweistufiges Anheben des Erntegutes bezüglich der Hochachse Z. Das Erntegut, welches in einer bestimmten Dicke auf dem Boden 70 liegt, wird zunächst von den Aufnahmezinken 12 erfasst und durch diese aufwärts und anteilig entlang der Längsachse X nach hinten gefördert. Es wird zum Teil durch die Abstreifvorrichtung 20 abgestreift, zum Teil wird es allerdings auch direkt durch die Übergabezinken 15 des Übergaberotors 14 übernommen. In jedem Fall erfolgt letztendlich eine Übernahme des Erntegutes durch den Übergaberotor 14, der das Erntegut wiederum bezüglich der Hochachse Z anhebt und bezüglich der Längsachse X nach hinten fördert. Insgesamt kann das Erntegut in eine vergleichsweise große Höhe über dem Boden 70 gebracht werden, während der Aufnahmerotor 11 vergleichsweise klein gehalten werden kann, wobei der Bewegungsbereich C eines Aufnahmezinkens 12 beispielsweise einen Durchmesser von 60 cm haben. Dies wiederum führt dazu, dass die Aufnahmezinken 12 das Erntegut in einer Bewegungsphase erfassen, in welcher sie sich bereits überwiegend aufwärts bewegen und nicht vorrangig in Fahrtrichtung F nach vorne. Daher wird zumindest weitgehend verhindert, dass der Aufnahmerotor 11 das Erntegut nach vorne schleudert oder lediglich vor sich her schiebt. Die so insgesamt erreichte große Förderhöhe ist wiederum vorteilhaft für die Übergabe des Ernteguts an die Querfördervorrichtung 30, wie nachfolgend noch geschildert wird. Die Förderhöhe wird auch dadurch erreicht, dass der Übergaberotor wenigstens teilweise oberhalb der Förderfläche angeordnet ist. Insbesondere ist ein bezüglich der Hochachse Z oberster Punkt P des Bewegungsbereichs D der Übergabezinken 15 entlang der Hochachse Z um ca. 70 % des Durchmessers des Bewegungsbereichs D höher angeordnet als ein zur Aufnahmevorrichtung 10 benachbarter, niedrigster Bereich 34 der Förderfläche 33.

Sowohl die Drehzahl des Aufnahmerotors 11 als auch die des Übergaberotors 14 können eingestellt werden, und zwar unabhängig voneinander. Die Drehzahl des Aufnahmerotors 11 kann insbesondere in Abhängigkeit von der Fahrgeschwindigkeit des Schwaders 1 sowie der Menge und gegebenenfalls Beschaffenheit des Ernteguts auf dem Boden 70 eingestellt werden. Aus der Drehzahl des Aufnahmerotors 11 ergibt sich normalerweise eine sinnvolle Mindestdrehzahl des Übergaberotors 14, die notwendig ist, um das übernommene Erntegut schnell genug weiter zu transportieren. Darüber hinaus kann die Drehzahl des Übergaberotors 14 in Abhängigkeit von weiteren Faktoren ausgewählt werden. Insbesondere ist sie vorteilhaft so gewählt, dass das Erntegut sich teilweise durch die Fliehkraft vom Übergaberotor 14 lösen kann und somit nicht einfach abgestreift wird, sondern geworfen beziehungsweise geschleudert wird. Auf diese Weise fällt das Erntegut nicht nur einfach herab, wo es auf einem zur Aufnahmevorrichtung 10 benachbarten Bereich 34 der Förderfläche 33 landen würde. Vielmehr wird das Erntegut auch und insbesondere bevorzugt überwiegend zur Mitte der Förderfläche und auch teilweise zu dem der Aufnahmevorrichtung 10 gegenüberliegenden Ende hin geworfen. Es ergibt sich somit eine gleichmäßigere Verteilung des Ernteguts auf der Förderfläche 33, und ein möglicherweise zur Beschädigung des Erntegut führendes Anhäufen kann verhindert werden. Um zu verhindern, dass das Erntegut zu weit bezüglich der Längsachse X nach hinten gelangt, ist zum einen die Förderfläche 33 gegenüber einer horizontalen Ebene nach vorne in Richtung auf die Aufnahmevorrichtung 10 geneigt. In Fig. 2 und 3 beträgt der Neigungswinkel ca. 20°, allerdings sind auch andere Neigungswinkel möglich und sinnvoll. Als zusätzliche Maßnahme weist die Schwadereinheit 8 rückseitig der Querfördervorrichtung 30 ein Prallblech 35 auf. Es ist zu beachten, dass selbst der Eintauchbereich 29, in welchem eventuell noch an den Übergabezinken 15 anhaftendes Erntegut spätestens abgestreift wird, deutlich oberhalb des zur Aufnahmevorrichtung 10 benachbarten Bereichs 34 der Förderfläche 33 angeordnet ist. Das heißt, selbst dieses Erntegut wird abgeworfen und nicht einfach auf die Förderfläche 33 geschoben oder gedrückt, was wiederum die Gefahr einer Beschädigung erhöhen würde.

Um die effiziente Aufnahme und Förderung des Erntegutes zu unterstützen, weist die Schwadereinheit 8 außerdem einen Niederhalter 40 auf. Dieser ist über einen Niederhalterträger 55 mit dem Querförderrahmen 31 verbunden. In Fig. 1 sind Niederhalter 40 und Niederhalterträger 55 nur schematisch dargestellt, während ihre genaue Struktur aus Fig. 2, 3 und 6 hervorgeht. Der Niederhalter 40 weist eine Niederhalterwalze 41 auf, die drehbar an einem Walzenträger 42 gelagert ist, der seinerseits über ein Zwischenelement 44 mit dem Niederhalterträger 55 verbunden ist.

Dabei ist eine Position des Walzenträgers 42 am Niederhalterträger 55 veränderbar. Zum einen ist hierfür eine erste Verstellführung 44 vorgesehen, die aus einem Langloch im Walzenträger 42 und einer durch dieses hindurchgeführten, mit dem Zwischenelement 43 verbundenen Schraube gebildet ist. Durch Lösen der Schraube kann der Walzenträger 42 gegenüber dem Zwischenelement 43 geschwenkt werden, wodurch im Wesentlichen eine Position der Niederhalterwalze 41 in Richtung der Längsachse X verändert werden kann, bevor die Schraube wieder festgezogen wird. Über eine zweite Verstellführung 45 kann das Zwischenelement 43 zusammen mit dem Walzenträger 42 und der Niederhalterwalze 41 in der Höhe verstellt werden. Die Niederhalterwalze 41 sorgt zum einen dafür, dass sich das Erntegut vor dem Aufnahmerotor 11 nicht zu hoch auftürmen kann, zum anderen bildet sie einen Gegenhalter für bereits vom Aufnahmerotor 11 erfasstes Erntegut. Oberhalb sowie bezüglich der Längsachse X hinter der Niederhalterwalze schließt sich eine Leitabdeckung 46 an, die als Leitblech ausgebildet ist. Die Leitabdeckung 46 ist für Erntegut undurchlässig und definiert zwischen sich und den Rotoren 11, 14 einen Förderkanal 18. Es verhindert, dass sich Erntegut frühzeitig von einem der Rotoren 11, 14 löst. Auch die Leitabdeckung 46 ist verstellbar mit dem Niederhalterträger 55 verbunden, wozu dritte Verstellführungen 47 vorgesehen sind. Schließlich ist der Niederhalterträger 55 mit dem Niederhalter 40 insgesamt um eine Schwenkachse G gegenüber dem Querförderrahmen 31 schwenkbar. Seine Schwenkstellung kann über einen Hydraulikzylinder 56 beeinflusst werden. Hierdurch ist zum Beispiel eine Anpassung an die aktuelle Erntegutmenge oder -beschaffenheit möglich. Über einen Schwenkbegrenzer 57, welcher zwischen Niederhalterträger 55 und Querförderrahmen 31 zwischengeordnet ist, kann ein Bewegungsspielraum des Niederhalterträgers 55 eingestellt werden.

Mit der Leitabdeckung 46 sind eine Mehrzahl von Leitzinken 48 verbunden, die sich bezüglich der Längsachse X nach hinten erstrecken. Sie können aus Draht, bspw. Federdraht, ausgebildet sein. Sie sind in ihrer Gesamtheit an einem Zinkenträger 49 angeordnet, der um eine parallel zur Querachse Y verlaufende Schwenkachse H gegenüber dem Leitabdeckung schwenkbar ist. Dies wird wiederum durch vierte Verstellführungen 50 realisiert. In dem die Neigung der Leitzinken 48 gegenüber der horizontalen Ebene verändert wird, kann die Wurfweite des Erntegutes wesentlich beeinflusst werden. In Fig. 2 ist in durchgezogene Linie eine minimale Neigung dargestellt, die bei ansonsten gleichen Parametern die geringste Wurfweite erzeugt sowie durch punktierten Linie eine maximale Neigung, die zu einer maximalen Wurfweite führt. Die jeweils geeignete Einstellung hängt von verschiedenen Parametern ab, insbesondere der Drehzahl des Übergaberotors 14 und der Beschaffenheit des Erntegutes. Durch ihre parallele, langgestreckte Struktur, die in Fig. 6 gut erkennbar ist, beschränken die Leitzinken nicht nur die Flugbahn des Erntegutes bezüglich der Hochachse Z, sondern sie beeinflussen auch die Bewegung des Erntegutes entlang der Querachse Y. In Fig.6 sind ist jeder Leitzinken parallel zu einer durch die Längsachse X und die Hochachse Y aufgespannten Längsebene angeordnet. Allerdings ist ihre Neigung in Richtung der Querachse Y veränderbar. Bei der hier dargestellten Ausführungsform sind jeweils zwei benachbarte Leitzinken 48 einstückig miteinander verbunden und über eine Schlauchschelle 51 am Zinkenträger 49 befestigt. Die Schlauchschelle 51 ist um eine Schwenkachse I schwenkbar. Jeder Leitzinken 48 ist zum einen durch ein am Zinkenträger 49 ausgebildetes, sich parallel zur Querachse Y erstrecken des Langloch 52 geführt sowie andererseits durch einen in den Figuren nicht erkennbares Loch in einer Stellblende 53, die über Schrauben am Zinkenträger 49 arretiert werden kann. Indem die Stellblende 53 parallel zur Querachse Y verschoben wird, kann die Neigung einer Mehrzahl von Paaren von Leitzinken 48 gleichzeitig eingestellt werden. Die Neigung kann dabei an die aktuell gewählte Fördererrichtung der Querfördervorrichtung 30 angepasst werden. D. h., wenn die Querfördervorrichtung 30 aktuell in Fahrtrichtung F gesehen nach links fördert, wird die Neigung der Leitzinken 48 so angepasst, dass sich ihre Spitzen nach links verlagern. Auf diese Weise erhält das Erntegut bereits vor dem Erreichen der Förderfläche 33 eine Geschwindigkeitskomponente in der vorgesehenen Richtung, was den Abtransport durch die Querfördervorrichtung 30 unterstützt und beschleunigt.

## Patentansprüche

1. Feldbearbeitungsmaschine (1) mit wenigstens einer Aufnahmevorrichtung (10), die einen Aufnahmerotor (11) und einen Übergaberotor (14) aufweist, welche um Drehachsen (A, B) , die sich wenigstens überwiegend entlang einer Querachse (Y) erstrecken, gleichsinnig antreibbar sind, wobei der Aufnahmerotor (11) dazu eingerichtet ist, landwirtschaftliches Erntegut mittels Aufnahmezinken (12) vom Boden (70) aufzunehmen, bezüglich einer Hochachse (Z) anzuheben und an den Übergaberotor (14) zu übergeben, der dazu eingerichtet ist, das Erntegut mittels Übergabezinken (15) zu übernehmen und an eine nachgeordnete Vorrichtung (30) zu übergeben, welche bezüglich einer Längsachse (X) wenigstens teilweise hinter der Aufnahmevorrichtung (10) angeordnet ist, wobei die Übergabezinken (15) derart zwischen die Aufnahmezinken (12) eingreifen, dass sich Bewegungsbereiche (C, D) von Übergabezinken (15) und von Aufnahmezinken (12), entlang der Querachse (Y) gesehen, überlappen, wobei die Aufnahmevorrichtung (10) eine Abstreifvorrichtung (20) aufweist mit Aufnahmezinken-Abstreiferabschnitten (23) sowie bezüglich der Querachse (Y) dazwischen ausgebildeten Aufnahmezinken-Zwischenräumen (25), durch welche die Aufnahmezinken (12) wenigstens teilweise hindurchragen, wobei
die Abstreifvorrichtung (20) Übergabezinken-Abstreiferabschnitte (24) aufweist sowie dazwischen ausgebildete Übergabezinken-Zwischenräume (26), durch welche die Übergabezinken (15) wenigstens teilweise hindurchragen, wobei die Übergabezinken-Abstreiferabschnitte (24) derart ausgebildet sind, dass die Übergabezinken (15) entsprechend einer Rotation des Übergaberotors (14) zwischen ihnen eintauchen,
**dadurch gekennzeichnet, dass**
wenigstens ein Aufnahmezinken-Zwischenraum (25) in einem Übergangsbereich (27) in einen Übergabezinken-Zwischenraum (26) übergeht.

2. Feldbearbeitungsmaschine (1) nach Anspruch 1, **dadurch gekennzeichnet, dass** der Übergaberotor (14) wenigstens teilweise höher angeordnet ist als der Aufnahmerotor (11) und dazu eingerichtet ist, das vom Aufnahmerotor (11) übernommene Erntegut wenigstens anfänglich bezüglich der Hochachse (Z) anzuheben.

3. Feldbearbeitungsmaschine (1) nach einem der vorherigen Ansprüche, **dadurch gekennzeichnet, dass** die Übergabezinken (15) ein in Drehrichtung vorne angeordnetes Übergabe-Förderprofil (19) aufweisen, welches rückwärts geneigt ist, so dass es radial nach außen hin tangential zurückweicht, und die Aufnahmezinken (12) ein in Drehrichtung vorne angeordnetes Aufnahme-Förderprofil (17) aufweisen, welches wenigstens bereichsweise stärker vorwärts geneigt ist als das Übergabe-Förderprofil (19).

4. Feldbearbeitungsmaschine (1) nach einem der vorherigen Ansprüche, **dadurch gekennzeichnet, dass** die Übergabezinken (15) derart ausgebildet sind, dass im Verlauf der Bewegung des Übergaberotors (14) entlang der Abstreifvorrichtung (20) ein Abstreifwinkel (β₁, β₂) zwischen einem jeweils zum Abstreifer benachbarten Teil des Übergabe-Förderprofils (19) und dem benachbarten Übergabezinken-Abstreiferabschnitt (24) durchgehend wenigstens 80° beträgt.

5. Feldbearbeitungsmaschine (1) nach einem der vorherigen Ansprüche, **dadurch gekennzeichnet, dass** die Übergabezinken (15) ein Übergabe-Förderprofil (19) aufweisen, welches rückwärts geneigt ist, wobei ein Neigungswinkel (α₃, α₄) gegenüber einer radialen Richtung (R) radial nach außen hin zunimmt.

6. Feldbearbeitungsmaschine (1) nach einem der vorangehenden Ansprüche, **dadurch gekennzeichnet, dass** die Abstreifvorrichtung (20) an einem Übergangsbereich (27) eine einen Aufnahmezinken-Zwischenraum (25) begrenzende Leitkante (28) aufweist, die gegenüber einer zur Drehachse (A) des Aufnahmerotors (11) senkrechten Rotationsebene (E) in Richtung auf den Übergabezinken-Zwischenraum (26) zur Drehachse (A) hin geneigt ist, wobei die Neigung gegenüber der Rotationsebene (E) bevorzugt zwischen 20° und 70° beträgt.

7. Feldbearbeitungsmaschine (1) nach einem der vorangehenden Ansprüche, **dadurch gekennzeichnet, dass** diese als Schwader (1) ausgebildet ist, mit wenigstens einer Schwadereinheit (8), die eine Aufnahmevorrichtung (10) aufweist sowie als nachgeordnete Vorrichtung eine Querfördervorrichtung (30), die dazu eingerichtet ist, das vom Übergaberotor (14) übergebene Erntegut auf einer Förderfläche (33) aufzunehmen, entlang der Querachse (Y) zu fördern und schwadweise auf dem Boden (70) abzulegen.

8. Feldbearbeitungsmaschine (1) nach Anspruch 7, **dadurch gekennzeichnet, dass** der Übergaberotor (14) dazu eingerichtet ist, das Erntegut bezüglich der Hochachse (Z) wenigstens teilweise oberhalb der Förderfläche (33) abzugeben und auf diese abzuwerfen.

9. Feldbearbeitungsmaschine (1) nach einem der Ansprüche 7-8, **dadurch gekennzeichnet, dass** ein Eintauchbereich (29), in welchem die Übergabezinken (15) vollständig zwischen den Übergabezinken-Abstreiferabschnitten (24) eintauchen, oberhalb eines zur Aufnahmevorrichtung (10) benachbarten Bereichs (34) der Förderfläche (33) angeordnet ist.

10. Feldbearbeitungsmaschine (1) nach einem der Ansprüche 7-9, **dadurch gekennzeichnet, dass** die Querfördervorrichtung (30) zumindest derart anordenbar ist, dass die Förderfläche (33) gegenüber der horizontalen Ebene zur Aufnahmevorrichtung (10) hin geneigt ist.

11. Feldbearbeitungsmaschine (1) nach einem der vorangehenden Ansprüche, **dadurch gekennzeichnet, dass** diese einen Niederhalter (40) aufweist, mit einer bezüglich der Längsachse (X) wenigstens teilweise vor dem Aufnahmerotor (11) angeordneten, drehbaren Niederhalterwalze (41) sowie einer bezüglich der Längsachse (X) wenigstens teilweise dahinter angeordneten Leitabdeckung (46), die zwischen sich und wenigstens einem der Rotoren (11, 14) einen Förderkanal (18) für Erntegut definiert.

12. Feldbearbeitungsmaschine (1) nach Anspruch 11, **dadurch gekennzeichnet, dass** der Niederhalter (40) über wenigstens einen Niederhalterträger (55) derart aufgehängt ist, dass er gegenüber den Rotoren (11, 14) wenigstens höhenbeweglich ist.

13. Feldbearbeitungsmaschine (1) nach Anspruch 12, **dadurch gekennzeichnet, dass** die Niederhalterwalze (41) und/oder die Leitabdeckung (46) einzeln gegenüber dem Niederhalterträger (55) verstellbar sind.

14. Feldbearbeitungsmaschine (1) nach einem der vorangehenden Ansprüche, **dadurch gekennzeichnet, dass** diese eine Mehrzahl von Leitzinken (48) aufweist, die sich entlang der Längsachse (X) erstrecken und dazu eingerichtet sind, das vom Übergaberotor (14) abgegebene Erntegut in Richtung auf die nachgeordnete Vorrichtung (30) zu lenken, wobei eine Neigung der Leitzinken (48) gegenüber der Längsachse (X) in Richtung auf die Querachse (Y) einstellbar ist.

15. Feldbearbeitungsmaschine (1) nach Anspruch 14, **dadurch gekennzeichnet, dass** der Niederhalter (40) die Mehrzahl von Leitzinken (48) aufweist, die sich entlang der Längsachse (X) erstrecken und dazu eingerichtet sind, das vom Übergaberotor (14) abgegebene Erntegut in Richtung auf die nachgeordnete Vorrichtung (30) zu lenken.

16. Feldbearbeitungsmaschine (1) nach einem der Ansprüche 14-15, **dadurch gekennzeichnet, dass** eine Neigung der Leitzinken (48) gegenüber der Längsachse (X) in Richtung auf die Hochachse (Z) einstellbar ist.

## Claims

1. Field cultivation machine (1) comprising at least one pickup device (10), which has a pickup rotor (11) and a transfer rotor (14) which can be driven in the same direction about axes of rotation (A, B) extending at least predominantly along a transverse axis (Y), wherein the pickup rotor (11) is configured to pick up agricultural crop from the ground (70) by means of pickup tines (12), to lift it in relation to a vertical axis (Z) and to transfer it to the transfer rotor (14), which is configured to take up the crop by means of transfer tines (15) and to transfer it to a downstream device (30) which is arranged at least partially behind the pickup device (10) in relation to a longitudinal axis (X), wherein the transfer tines (15) engage between the pickup tines (12) such that the movement ranges (C, D) of the transfer tines (15) and of the pickup tines (12) overlap, when viewed along the transverse axis (Y), wherein the pickup device (10) has a stripping device (20) with pickup tine stripping portions (23) and pickup tine gaps (25) formed therebetween in relation to the transverse axis (Y), through which gaps the pickup tines (12) at least partially project, wherein
the stripping device (20) has transfer tine stripping portions (24) and transfer tine gaps (26) formed therebetween, through which gaps the transfer tines (15) at least partially project, wherein the transfer tine stripping portions (24) are designed such that the transfer tines (15) are immersed therebetween in accordance with a rotation of the transfer rotor (14),
**characterized in that**
at least one pickup tine gap (25) transitions into a transfer tine gap (26) in a transition region (27).

2. Field cultivation machine (1) according to claim 1, **characterized in that** the transfer rotor (14) is arranged at least partially higher than the pickup rotor (11) and is configured to lift the crop taken up by the pickup rotor (11) at least initially in relation to the vertical axis (Z).

3. Field cultivation machine (1) according to either of the preceding claims, **characterized in that** the transfer tines (15) have a transfer conveying profile (19) arranged at the front in the direction of rotation, which profile is inclined backward so that it recedes radially outwards tangentially, and the pickup tines (12) have a pickup conveying profile (17) arranged at the front in the direction of rotation, which profile is inclined forward to a greater extent, at least in some regions, than the transfer conveying profile (19).

4. Field cultivation machine (1) according to any of the preceding claims, **characterized in that** the transfer tines (15) are designed such that during the movement of the transfer rotor (14) along the stripping device (20), a stripping angle (β₁, β₂) between a part of the transfer conveying profile (19) adjacent to the stripper and the adjacent transfer tine stripping portion (24) is at least 80° throughout.

5. Field cultivation machine (1) according to any of the preceding claims, **characterized in that** the transfer tines (15) have a transfer conveying profile (19) which is inclined backwards, wherein an angle of inclination (α₃, α₄) increases radially outwards in a radial direction (R).

6. Field cultivation machine (1) according to any of the preceding claims, **characterized in that** the stripping device (20) has, at a transition region (27), a guide edge (28) that defines a pickup tine gap (25) and is inclined toward the axis of rotation (A) in the direction of the transfer tine space (26) in relation to a plane of rotation (E) perpendicular to the axis of rotation (A) of the pickup rotor (11), wherein the inclination relative to the plane of rotation (E) is preferably between 20° and 70°.

7. Field cultivation machine (1) according to any of the preceding claims, **characterized in that** this is designed as a swather (1), comprising at least one swathing unit (8), which has a pickup device (10) and, as a downstream device, a transverse conveying device (30) which is configured to receive the crop transferred by the transfer rotor (14) onto a conveying surface (33), to convey it along the transverse axis (Y) and to deposit it in swaths on the ground (70).

8. Field cultivation machine (1) according to claim 7, **characterized in that** the transfer rotor (14) is configured to discharge the crop at least partially above the conveying surface (33) in relation to the vertical axis (Z) and to drop it onto the conveying surface.

9. Field cultivation machine (1) according to either of claims 7-8, **characterized in that** an immersion region (29) in which the transfer tines (15) are fully immersed between the transfer tine stripping portions (24) is arranged above a region (34) of the conveying surface (33) adjacent to the pickup device (10).

10. Field cultivation machine (1) according to any of claims 7-9, **characterized in that** the transverse conveying device (30) can be arranged at least in such a way that the conveying surface (33) is inclined relative to the horizontal plane toward the pickup device (10).

11. Field cultivation machine (1) according to any of the preceding claims, **characterized in that** this comprises a hold-down device (40), which has a rotatable hold-down roller (41) arranged at least partially in front of the pickup rotor (11) in relation to the longitudinal axis (X) and a guide cover (46) arranged at least partially behind it in relation to the longitudinal axis (X), which guide cover defines a conveying channel (18) for crop between itself and at least one of the rotors (11, 14).

12. Field cultivation machine (1) according to claim 11, **characterized in that** the hold-down device (40) is suspended over at least one hold-down carrier (55) such that it is at least vertically movable relative to the rotors (11, 14).

13. Field cultivation machine (1) according to claim 12, **characterized in that** the hold-down roller (41) and/or the guide cover (46) are individually adjustable relative to the hold-down carrier (55).

14. Field cultivation machine (1) according to any of the preceding claims, **characterized in that** this comprises a plurality of guide tines (48), which extend along the longitudinal axis (X) and are configured to direct the crop discharged from the transfer rotor (14) in the direction of the downstream device (30), wherein an inclination of the guide tines (48) relative to the longitudinal axis (X) is adjustable in the direction of the transverse axis (Y).

15. Field cultivation machine (1) according to claim 14, **characterized in that** the hold-down device (40) comprises the majority of guide tines (48), which extend along the longitudinal axis (X) and are configured to direct the crop discharged from the transfer rotor (14) in the direction of the downstream device (30).

16. Field cultivation machine (1) according to either of claims 14-15, **characterized in that** an inclination of the guide tines (48) relative to the longitudinal axis (X) is adjustable in the direction of the vertical axis (Z).

## Revendications

1. Machine de travail de champ (1) comportant au moins un dispositif de ramassage (10) qui présente un rotor de ramassage (11) et un rotor de transfert (14), lesquels peuvent être entraînés dans le même sens autour d'axes de rotation (A, B) s'étendant au moins en grande partie le long d'un axe transversal (Y), dans laquelle le rotor de ramassage (11) est conçu pour ramasser la récolte agricole à partir du sol (70) à l'aide de dents de ramassage (12), la soulever par rapport à un axe vertical (Z) et la transférer au rotor de transfert (14), lequel est conçu pour prendre en charge la récolte à l'aide de dents de transfert (15) et la transférer vers un dispositif disposé en aval (30) qui est disposé, par rapport à un axe longitudinal (X), au moins partiellement derrière le dispositif de ramassage (10), dans laquelle les dents de transfert (15) viennent en prise entre les dents de ramassage (12) de telle sorte que des zones de mouvement (C, D) de dents de transfert (15) et de dents de ramassage (12), vues le long de l'axe transversal (Y), se chevauchent, dans laquelle le dispositif de ramassage (10) présente un dispositif de raclage (20) comportant des sections de raclage de dents de ramassage (23) ainsi que, par rapport à l'axe transversal (Y), des espaces intermédiaires de dents de ramassage (25) formés entre celles-ci, à travers lesquels les dents de ramassage (12) font saillie au moins partiellement, dans laquelle
le dispositif de raclage (20) présente des sections de raclage de dents de transfert (24) ainsi que des espaces intermédiaires de dents de transfert (26) formés entre celles-ci, à travers lesquels les dents de transfert (15) font saillie au moins partiellement, dans laquelle les sections de raclage de dents de transfert (24) sont conçues de telle sorte que les dents de transfert (15) s'enfoncent entre elles en fonction de la rotation du rotor de transfert (14),
**caractérisée en ce que**
au moins un espace intermédiaire de dents de ramassage (25) se prolonge, dans une zone de transition (27), par un espace intermédiaire de dents de transfert (26).

2. Machine de travail de champ (1) selon la revendication 1,
**caractérisée en ce que** le rotor de transfert (14) est disposé au moins partiellement plus haut que le rotor de ramassage (11) et est conçu pour soulever la récolte ramassée par le rotor de ramassage (11) au moins initialement par rapport à l'axe vertical (Z).

3. Machine de travail de champ (1) selon l'une des revendications précédentes, **caractérisée en ce que** les dents de transfert (15) présentent un profil de transport de transfert (19) disposé à l'avant dans le sens de rotation, lequel profil est incliné vers l'arrière de sorte qu'il s'écarte tangentiellement vers l'extérieur dans la direction radiale, et les dents de ramassage (12) présentent un profil de transport de ramassage (17) disposé à l'avant dans le sens de rotation, lequel profil est, au moins dans certaines zones, plus fortement incliné vers l'avant que le profil de transport de transfert (19).

4. Machine de travail de champ (1) selon l'une des revendications précédentes, **caractérisée en ce que** les dents de transfert (15) sont réalisées de telle sorte que, au cours du mouvement du rotor de transfert (14) le long du dispositif de raclage (20), un angle de raclage (β₁, β₂) entre une partie du profil de transport de transfert (19) respectivement adjacente au racleur et la section de raclage de dents de transfert (24) adjacente est d'au moins 80° sur toute la longueur.

5. Machine de travail de champ (1) selon l'une des revendications précédentes, **caractérisée en ce que** les dents de transfert (15) présentent un profil de transport de transfert (19) qui est incliné vers l'arrière, dans laquelle un angle d'inclinaison (α₃, α₄) par rapport à une direction radiale (R) augmente vers l'extérieur dans la direction radiale.

6. Machine de travail de champ (1) selon l'une des revendications précédentes, **caractérisée en ce que** le dispositif de raclage (20) présente, au niveau d'une zone de transfert (27), un bord de guidage (28) délimitant un espace intermédiaire de dents de ramassage (25), lequel bord de guidage est incliné par rapport à un plan de rotation (E) perpendiculaire à l'axe de rotation (A) du rotor de ramassage (11) en direction de l'espace intermédiaire de dents de transfert (26) vers l'axe de rotation (A), dans laquelle l'inclinaison par rapport au plan de rotation (E) est de préférence comprise entre 20° et 70°.

7. Machine de travail de champ (1) selon l'une des revendications précédentes, **caractérisée en ce qu'**elle est réalisée comme un andaineur (1), comportant au moins une unité d'andainage (8) qui présente un dispositif de ramassage (10) ainsi que, en tant que dispositif disposé en aval, un dispositif de transport transversal (30) qui est conçu pour recevoir la récolte transférée par le rotor de transfert (14) sur une surface de transport (33), pour la transporter le long de l'axe transversal (Y) et pour la déposer en andains sur le sol (70).

8. Machine de travail de champ (1) selon la revendication 7,
**caractérisée en ce que** le rotor de transfert (14) est conçu pour déposer la récolte, par rapport à l'axe vertical (Z), au moins partiellement au-dessus de la surface de transport (33) et pour la projeter sur celle-ci.

9. Machine de travail de champ (1) selon l'une des revendications 7 à 8, **caractérisée en ce qu'**une zone d'enfoncement (29), dans laquelle les dents de transfert (15) s'enfoncent entièrement entre les sections de raclage de dents de transfert (24), est disposée au-dessus d'une zone (34) de la surface de transport (33) adjacente au dispositif de ramassage (10).

10. Machine de travail de champ (1) selon l'une des revendications 7 à 9, **caractérisée en ce que** le dispositif de transport transversal (30) peut être disposé au moins de telle sorte que la surface de transport (33) est inclinée par rapport au plan horizontal vers le dispositif de ramassage (10).

11. Machine de travail de champ (1) selon l'une des revendications précédentes, **caractérisée en ce qu'**elle présente un moyen de maintien vers le bas (40) comportant un rouleau de maintien vers le bas (41) pouvant tourner et disposé au moins partiellement avant le rotor de ramassage (11) par rapport à l'axe longitudinal (X), ainsi qu'un moyen de recouvrement de guidage (46) disposé au moins partiellement après ledit rouleau par rapport à l'axe longitudinal (X) et définissant entre lui-même et au moins l'un des rotors (11, 14) un canal de transport (18) pour la récolte.

12. Machine de travail de champ (1) selon la revendication 11,
**caractérisée en ce que** le moyen de maintien vers le bas (40) est suspendu par l'intermédiaire d'au moins un support de moyen de maintien vers le bas (55) de telle sorte qu'il peut au moins se déplacer en hauteur par rapport aux rotors (11, 14).

13. Machine de travail de champ (1) selon la revendication 12,
**caractérisée en ce que** le rouleau de maintien vers le bas (41) et/ou le moyen de recouvrement de guidage (46) sont réglables individuellement par rapport au support de moyen de maintien vers le bas (55).

14. Machine de travail de champ (1) selon l'une des revendications précédentes, **caractérisée en ce qu'**elle présente une pluralité de dents de guidage (48) qui s'étendent le long de l'axe longitudinal (X) et sont conçues pour diriger la récolte déposée par le rotor de transfert (14) en direction du dispositif disposé en aval (30), dans laquelle une inclinaison des dents de guidage (48) par rapport à l'axe longitudinal (X) en direction de l'axe transversal (Y) est réglable.

15. Machine de travail de champ (1) selon la revendication 14,
**caractérisée en ce que** le moyen de maintien vers le bas (40) présente une pluralité de dents de guidage (48) qui s'étendent le long de l'axe longitudinal (X) et sont conçues pour diriger la récolte déposée par le rotor de transfert (14) en direction du dispositif disposé en aval (30).

16. Machine de travail de champ (1) selon l'une des revendications 14 à 15, **caractérisée en ce qu'**une inclinaison des dents de guidage (48) par rapport à l'axe longitudinal (X) en direction de l'axe vertical (Z) est réglable.
